# EUROPEAN PATENT APPLICATION

(11) **EP 4 317 204 A1**
(43) Date of publication of application: **07.02.2024**
(21) Application number: 22780468.9
(22) Date of filing: 24.03.2022
(51) Int. Cl.: C08F 8/04, C08F 2/38, C08F 2/48, C08F 20/14

(54) **MANUFACTURING METHOD FOR POLYMER HAVING THIOCARBONYLTHIO GROUP REMOVED**

(30) Priority: 31.03.2021 JP 2021059923
(71) Applicant: FUJIFILM Corporation, Tokyo 106-8620 (JP); FUJIFILM Wako Pure Chemical Corporation, Osaka 540-8605 (JP)
(72) Inventor: WADA, Kenji, Ashigarakami-gun, Kanagawa 258-8577 (JP)
(74) Representative: HGF
(86) International application number: PCT/JP2022/013921
(87) International publication number: WO 2022/210254

(57) **Abstract**

Provided is a method for producing a thiocarbonylthio group-removed polymer, including a step of irradiating a mixed solution which contains a polymer having a thiocarbonylthio group at a terminal of a main chain and contains at least one hydroxyl group-containing compound of an alcohol compound or a phenol compound to remove the thiocarbonylthio group from the polymer.

## Description

### BACKGROUND OF THE INVENTION

### 1. Field of the Invention

The present invention relates to a method for producing a thiocarbonylthio group-removed polymer.

### 2. Description of the Related Art

A reversible addition-fragmentation chain transfer (RAFT) polymerization method, which is a type of polymerization method for a polymerizable compound having an ethylenically unsaturated bond, has been known as a living radical polymerization method capable of realizing a precise polymerization reaction in which a molecular weight, a molecular weight distribution, and the like can be controlled. The RAFT polymerization method is a method of polymerizing the polymerizable compound having an ethylenically unsaturated bond in the presence of a chain transfer agent called a RAFT agent, and a reversible addition-fragmentation chain transfer polymerization polymer (also referred to as a RAFT polymerization polymer) is obtained in which cleavage residues of the RAFT agent are attached to terminals of the main chain of the polymer. For example, since the RAFT agent suitably used in the RAFT polymerization method is a compound including a thiocarbonylthio group, the obtained RAFT polymerization polymer has a thiocarbonylthio group (-S-C(=S)-Z; Z represents a substituent determined by the type of the RAFT agent) bonded as a cleavage residue to one terminal of the main chain.

The RAFT polymerization method is a synthesis method useful in that it can produce a RAFT polymerization polymer having excellent properties such as a molecular weight, but there is a problem to be solved for practical use due to the chemical structure of the RAFT polymerization polymer. That is, the thiocarbonylthio group introduced into the RAFT polymerization polymer causes the RAFT polymerization polymer to exhibit a color. In addition, it is easily decomposed (deteriorated) with time and generates a volatile compound having a sulfur odor. Therefore, the RAFT polymerization polymer has not been put into practical use only in various applications but also in optical applications, patterning materials, life science applications, and the like, utilizing excellent properties such as an excellent molecular weight.

Various techniques have been studied and conducted for solving the above-described problems. For example, JP2015-505881A discloses a method for removing a radical-induced thiocarbonylthio group by providing a solution containing a RAFT polymer in a solvent with a free radical initiator and a hydrogen atom-donor source; a method for removing a thiocarbonylthio group by supplying a nucleophilic reagent such as an amine, a hydroxide, and a thiol to the solution containing a RAFT polymer in a solvent; a method of irradiating the solution containing a RAFT polymer in a solvent with ultraviolet rays; and the like. In addition, Macromolecules 2007, 40, pp.4446 to 4455 discloses a method for removing a thiocarbonylthio group by a radical-induced reduction by heating a solution containing a RAFT polymer, a hydrogen donor such as hypophosphite, and an initiator.

### SUMMARY OF THE INVENTION

It is expected that the above-described problems can be solved to some extent by applying the techniques disclosed in JP2015-505881A and Macromolecules 2007, 40, pp.4446 to 4455 to the RAFT polymerization polymer.

However, since these techniques require strongly reducing reaction conditions to remove the thiocarbonylthio group, and a plurality type of compounds are used, it cannot be said that the thiocarbonylthio group can be easily removed with a high removal rate under mild conditions, and there is room for improvement. Furthermore, there is a concern that the removal of the thiocarbonylthio group impairs the properties of the RAFT polymerization polymer.

An object of the present invention is to provide a method for producing a thiocarbonylthio group-removed polymer by irradiating a polymer having a thiocarbonylthio group at a terminal of a main chain with light, in which, despite of mild conditions, a high removal rate of thiocarbonylthio groups is easily achieved and properties of the polymer are maintained.

As a result of studying a photo-RAFT polymerization method, the present inventor has found that a RAFT agent including a thiocarbonylthio group is decomposed by light irradiation to generate a radical species, and a RAFT polymerization reaction can occur. Based on this finding, the present inventor has focused on the possibility that, even in a polymer having a thiocarbonylthio group at a terminal of a main chain, the thiocarbonylthio group may undergo a photodecomposition reaction with the light irradiation, and has considered that, in a case where a compound which serves as a hydrogen source (a compound which generates a hydrogen element (for example, a radical, an ion, and the like)) coexists in the system, the hydrogen element generated from this compound is preferentially (selectively) bonded to the polymer, which makes it possible to remove (substitute) or modify (cleave or modify) the thiocarbonylthio group from the polymer.

In order to realize the consideration, as a result of further studies on a decomposition reaction of the thiocarbonylthio group with the light irradiation and the coexisting compound, the present inventor has found that, by coexisting at least one hydroxyl group-containing compound selected from an alcohol compound or a phenol compound in the light irradiation of the polymer having a thiocarbonylthio group, despite of mild and simple operation of the light irradiation, the thiocarbonylthio group can be removed from the polymer having a thiocarbonylthio group at a high removal rate, without significantly impairing excellent properties of the polymer having a thiocarbonylthio group.

The present invention has been completed by further repeating studies on the basis of the above-described finding.

That is, the above-described object has been achieved by the following method.
<1> A method for producing a thiocarbonylthio group-removed polymer, comprising:
   a step of irradiating a mixed solution which contains a polymer having a thiocarbonylthio group at a terminal of a main chain and contains at least one hydroxyl group-containing compound of an alcohol compound or a phenol compound to remove the thiocarbonylthio group from the polymer.
<2> The method for producing a thiocarbonylthio group-removed polymer according to <1>,
   in which a light source is a light emitting diode.
<3> The method for producing a thiocarbonylthio group-removed polymer according to <1> or <2>,
   in which a light source is a light emitting diode which emits light having a wavelength of 300 to 500 nm.
<4> The method for producing a thiocarbonylthio group-removed polymer according to any one of <1> to <3>,
   in which the polymer having a thiocarbonylthio group is a reversible addition-fragmentation chain transfer polymerization polymer.
<5> The method for producing a thiocarbonylthio group-removed polymer according to any one of <1> to <4>, further comprising:
   the following step of synthesizing the polymer having a thiocarbonylthio group,
   [step of synthesizing polymer having thiocarbonylthio group]
   a step of subjecting a monomer to a reversible addition-fragmentation chain transfer polymerization reaction in a presence of a reversible addition-fragmentation chain transfer agent using a rotating photopolymerization reactor equipped with a continuously rotating reaction container to synthesize the polymer having a thiocarbonylthio group,
   in which, by continuously rotating the reaction container accommodating a mixed solution which contains the monomer and the reversible addition-fragmentation chain transfer agent around a rotation axis inclined with respect to a vertical direction, while stirring the mixed solution, the mixed solution is spread in a form of a film on an interior wall of the reaction container, and the mixed solution spread in the form of a film is irradiated with light from a light source.
<6> The method for producing a thiocarbonylthio group-removed polymer according to <5>,
   in which the mixed solution to be subjected to the removing step is prepared by mixing a polymerization reaction product obtained in the synthesizing step with the at least one hydroxyl group-containing compound of an alcohol compound or a phenol compound.

With the method for producing a thiocarbonylthio group-removed polymer according to the aspect of the present invention, the thiocarbonylthio group can be easily removed from the polymer having a thiocarbonylthio group at the terminal of the main chain under mild conditions by the light irradiation at a high removal rate, without impairing the properties of the polymer.

That is, according to the present invention, it is possible to provide a method for producing a thiocarbonylthio group-removed polymer by irradiating a polymer having a thiocarbonylthio group at a terminal of a main chain with light, in which, despite of mild conditions, a high removal rate of thiocarbonylthio groups is easily achieved and properties of the polymer are maintained.

The above and other features and advantages of the present invention will be further clarified by the following description.

### DESCRIPTION OF THE PREFERRED EMBODIMENTS

In the present invention, a numerical range represented by using "to" means a range including numerical values described before and after "to" as a lower limit value and an upper limit value. In the present invention, in a case of setting and describing a plurality of numerical ranges for a content of a compound, reaction conditions, and the like, the upper limit value and the lower limit value which form the numerical range are not limited to any particular combination of the upper limit value and the lower limit value, and a numerical range can be formed by appropriately combining the upper limit value and the lower limit value of each numerical range.

In the present invention, an expression of a compound (including a polymer) (for example, in a case where a compound is represented by an expression in which "compound" is attached to the end) refers to not only the compound itself but also a salt or an ion thereof. In addition, the expression also refers to a derivative obtained by modifying a part of the compound, for example, by introducing a substituent into the compound within a range where the effect of the present invention is not impaired.

In the present invention, (meth)acryl means one or both of acryl and methacryl. The same applies to (meth)acrylate.

In the present invention, a substituent, a linking group, or the like (hereinafter, referred to as a substituent or the like), which is not specified regarding whether to be substituted or unsubstituted, may have an appropriate substituent. Accordingly, even in a case where a YYY group is simply described in the present invention, this YYY group includes not only an aspect having a substituent but also an aspect not having a substituent. More specifically, "alkyl group" which is not specified regarding whether to be substituted or unsubstituted includes an alkyl group not having a substituent (unsubstituted alkyl group) and an alkyl group having a substituent (substituted alkyl group). The same is applied to a compound which is not specified in the present specification regarding whether to be substituted or unsubstituted.

In the present invention, in a case where a plurality of substituents or the like represented by a specific reference numeral are present or a plurality of substituents or the like are simultaneously or alternatively defined, the respective substituents or the like may be the same or different from each other. In addition, unless specified otherwise, in a case where a plurality of substituents or the like are adjacent to each other, the substituents may be linked or fused to each other to form a ring.

In the present invention, the polymer means a polymer, but it is synonymous with a so-called polymeric compound.

### [Method for producing thiocarbonylthio group-removed polymer]

### <Step of removing thiocarbonylthio group>

In the method for producing a thiocarbonylthio group-removed polymer according to the embodiment of the present invention (also referred to as a production method according to the embodiment of the present invention), a step of irradiating a mixed solution which contains a polymer having a thiocarbonylthio group at a terminal of a main chain and contains at least one hydroxyl group-containing compound of an alcohol compound or a phenol compound to remove the thiocarbonylthio group from the polymer having a thiocarbonylthio group (may be also simply referred to as a removing step) is performed.

In the removing step, the mixed solution described below is irradiated with light while preferably controlling the temperature.

In the removing step, a batch method can also be performed in which a predetermined amount of the mixed solution is charged into a reaction container and the thiocarbonylthio group is removed, and a continuous method can also be performed in which the mixed solution is continuously or intermittently charged into a reaction container and the thiocarbonylthio group is removed.

By the above-described removing step, while maintaining properties of the polymer having a thiocarbonylthio group at the terminal of the main chain (hereinafter, may be referred to as a thiocarbonylthio group-containing polymer) (without significantly impairing the properties or with equal to or higher properties), it is possible to easily remove the thiocarbonylthio group from the polymer with a high removal rate even under mild conditions.

In the production method according to the embodiment of the present invention, the removal rate of the thiocarbonylthio group may vary depending on an amount of the hydroxyl group-containing compound used, reaction conditions, and the like, but it is possible to achieve a removal rate of 95% by mole or more with respect to 100% by mole of the total amount of the thiocarbonylthio groups contained in the thiocarbonylthio group-containing polymer. Preferably, it is possible to achieve a high removal rate, for example, a removal rate close to 100% by mole, which cannot be detected or distinguished by a confirmation and identification method of Examples described later.

In the present invention, the thiocarbonylthio group to be removed (-S-C(=S)-Z; Z represents a substituent determined by the type of the RAFT agent, or the like) is not particularly limited. Examples of the group derived from the RAFT agent include a dithiobenzoate group, a trithiocarbonate group, a dithiocarbamate group, a dithiocarbonate group, and a xanthate group.

In the present invention, the "removing the thiocarbonylthio group (thiocarbonylthio group-removed)" means that the thiocarbonylthio group bonded to the terminal of the main chain of the thiocarbonylthio group-containing polymer is substituted with another group or atom, that the thiocarbonylthio group is converted into another group or atom, or that the thiocarbonylthio group is eliminated to an unsaturated bond. Specifically, it includes an aspect in which the "thiocarbonylthio group" of the thiocarbonylthio group-containing polymer is removed as it is (integrally) (substituted with a hydrogen atom) or converted into another group or atom, and also includes an aspect in which a part of a thiocarbonyl group is removed or converted (a thiocarbonylthio group is cleaved or modified) (for example, an aspect in which the thiocarbonylthio group is cleaved to leave an -SH group, and an aspect in which the thiocarbonylthio group and a hydrogen atom at a β-position are eliminated to form a double bond).

The removing step can be performed using a normal reactor. For example, the removing step can be performed using a reaction container, a stirrer, and a light source, all are not particularly limited. For example, the mixed solution charged into a reaction container such as a flask can be irradiated with light from a light source installed outside the reaction container toward the reaction container (mixed solution) under stirring with a magnetic stirrer or a mechanical stirrer. From the viewpoint that it is possible to perform a synthesizing step described later continuously, and further, in one-pot, it is preferable to perform the step using a rotating photopolymerization reactor described later.

### (Reaction conditions)

In the removing step, conditions for irradiating the mixed solution with light are not particularly limited, and the conditions can be appropriately set to conditions capable of photodecomposition of the thiocarbonylthio group. For example, an illuminance can be set to 0.1 mW/cm² or more, and is usually 0.1 to 10 mW/cm².

In addition, in the removing step, it is also possible to shield light other than the light emitted from the light source, for example, external light (natural light or artificial light in a device installation environment). In a case of shielding the external light, examples thereof include implementation in a dark room and a smoke curtain covering of the reaction container.

In the removing step, it is preferable to control a temperature of the mixed solution in the light irradiation of the mixed solution. The temperature control (reaction temperature) of the mixed solution is not particularly limited, but from the viewpoint that a thiocarbonylthio group-removing reaction proceeds in a shorter time, it is preferable that the temperature (under heating) exceeds room temperature (25°C), and for example, the temperature is more preferably 40°C to 150°C and still more preferably 50°C to 90°C.

In the removing step, it is preferable that the inside of the reaction container is degassed (deoxidized) and replaced with an inert gas. As a result, oxygen gas or the like, which can inhibit the thiocarbonylthio group-removing reaction, can be removed, the thiocarbonylthio group-removing reaction can proceed rapidly and uniformly in an inert gas atmosphere, and it is possible to maintain the properties of the thiocarbonylthio group-containing polymer and realize high reproducibility. In particular, in the removing step, after deoxygenation and further replacement with the inert gas, the thiocarbonylthio group-removed polymer can be produced with high reproducibility while maintaining high removal rate, both at scale-up and in industrial installations. The inert gas replacement includes an aspect in which the reaction container is filled with the inert gas and an aspect in which the reaction container is circulated with the inert gas, and an appropriate aspect can be selected. In the aspect of circulating the inert gas, the distribution amount is appropriately determined. Examples of the inert gas to be used include various gases commonly used, and examples thereof include nitrogen gas, helium gas, and argon gas.

In the removing step, a reaction time (time required from the start of the light irradiation to the end of the reaction) may be determined by considering a reaction scale, a reaction temperature, and the like depending on the progress of the thiocarbonylthio group-removing reaction, for example, a time required to reach a predetermined removal rate. For example, the reaction time can be 1 to 8 hours.

In the removing step, in a case of using a rotating photopolymerization reactor described later, conditions for continuously rotating the reaction container are not particularly limited, but production conditions in the synthesizing step described later can be appropriately adopted. However, in the removing step, it is not necessary to satisfy a mixed solution amount and a container filling rate, which will be described later.

In the removing step, the thiocarbonylthio group-removing reaction can also be stopped by stopping the light irradiation (removal of the light source) or the like.

### (Production scale)

Since the removing step is a simple method with the light irradiation, a production scale can be increased (industrial production) in addition to the synthesizing step described later. Specifically, it is as described in the synthesizing step later.

That is, the production method according to the embodiment of the present invention, including the removing step, is a simple method capable of scaling up (industrial production) with high reproducibility while maintaining a high removal rate of the thiocarbonylthio group-removed polymer. In particular, in the production method according to the embodiment of the present invention, including the synthesizing step described later and the removing step, the thiocarbonylthio group-removed polymer can be produced with high reproducibility and on an industrial production scale.

### (Mixed solution)

In the removing step, the mixed solution which contains a polymer having a thiocarbonylthio group at a terminal of a main chain and contains at least one hydroxyl group-containing compound of an alcohol compound or a phenol compound, preferably further containing a solvent, is used.

### - Polymer having thiocarbonylthio group at terminal of main chain -

The polymer having a thiocarbonylthio group at the terminal of the main chain, which is used in the removing step, is not particularly limited as long as it is a polymer in which the thiocarbonylthio group is bonded to at least one terminal of the main chain consisting of a homopolymer or a copolymer. As the main chain of the thiocarbonylthio group-containing polymer, main chains consisting of various known homopolymers or copolymers can be adopted, and a main chain including a polymer chain consisting of a chain polymerization polymer is preferable, and a polymer chain consisting of a homopolymer or a copolymer of a polymerizable compound (monomer) having an ethylenically unsaturated bond, which will be described later, is more preferable.

Here, the main chain refers to a linear molecular chain in which all molecular chains that constitute the polymer other than the main chain can be conceived as a branched chain or a pendant group with respect to the main chain. Although it depends on a mass-average molecular weight of the branched chain regarded as the branched chain or the pendant group, the longest chain among the molecular chains that constitute the polymer is typically the main chain. However, the main chain does not include a terminal group included in the terminal of the polymer. On the other hand, a side chain of the polymer means a branched chain other than the main chain, and includes a short chain and a long chain.

In addition, a method for producing the thiocarbonylthio group-containing polymer is not particularly limited, and an appropriate production method can be adopted depending on the homopolymer or the copolymer. From the viewpoint that the thiocarbonylthio group can be introduced at the terminal of the main chain and excellent properties are exhibited, a method of performing a RAFT polymerization of a monomer using a RAFT agent containing the thiocarbonylthio group is preferable.

Preferred examples of the thiocarbonylthio group-containing polymer used in the removing step include a polymer which is a homopolymer or a copolymer of a polymerizable compound (monomer) having an ethylenically unsaturated bond, which will be described later, in which the thiocarbonylthio group is bonded to at least one terminal of the main chain consisting of the homopolymer or the copolymer. From the viewpoint that the thiocarbonylthio group can be introduced at the terminal of the main chain and excellent properties are exhibited, more preferred examples thereof include a RAFT polymerization polymer obtained by performing a RAFT polymerization of a monomer using a RAFT agent including the thiocarbonylthio group. In the RAFT polymerization polymer, the thiocarbonylthio group is usually bonded to one terminal of the main chain. As the RAFT polymerization method, a known RAF polymerization method can be adopted without particular limitation, but from the viewpoint that it is easy to simply realize a high conversion rate, and that it can be performed continuously with the above-described removing step, and further, in one-pot, a RAFT polymerization method using a rotating photopolymerization reactor described later is preferable. The RAFT polymerization polymer polymerized by the RAFT polymerization method using the rotating photopolymerization reactor can also be used after being once isolated and purified. The RAFT polymerization polymer obtained by the RAFT polymerization method using the rotating photopolymerization reactor described later has the same meaning as a polymer described in the synthesizing step later.

The mixed solution may contain one kind or two or more kinds of thiocarbonylthio group-containing polymers.

### - Hydroxyl group-containing compound -

In the removing step, the hydroxyl group-containing compound is used as a removing agent of the thiocarbonylthio group (coexistence with the thiocarbonylthio group-containing polymer).

The compound used in the present step is at least one hydroxyl group-containing compound of an alcohol compound or a phenol compound. By allowing the hydroxyl group-containing compound to coexist during the light irradiation of the thiocarbonylthio group-containing polymer, the thiocarbonylthio group can be removed from the thiocarbonylthio group-containing polymer. It is considered that this is because the thiocarbonylthio group-containing polymer and a hydrogen atom of the hydroxyl group-containing compound are bonded to each other by the light irradiation of the thiocarbonylthio group-containing polymer.

Examples of the alcohol compound include an alcohol compound of an aliphatic saturated hydrocarbon or an aliphatic unsaturated hydrocarbon, and specific examples thereof include a compound in which a hydroxyl group is bonded to a primary, secondary, or tertiary carbon atom of an aliphatic saturated hydrocarbon or an aliphatic unsaturated hydrocarbon.

The number of constituent carbon atoms in the aliphatic saturated hydrocarbon or the aliphatic unsaturated hydrocarbon, forming the primary or secondary alcohol compound, is not particularly limited, and for example, it can be 1 (2) to 20, preferably 3 to 18 and more preferably 4 to 12. The number of constituent carbon atoms in the aliphatic saturated hydrocarbon or the aliphatic unsaturated hydrocarbon, forming the tertiary alcohol compound, is not particularly limited, and for example, it can be 4 to 20, preferably 4 to 18 and more preferably 4 to 12. The number of hydroxyl groups included in one molecule of the primary alcohol compound, the secondary alcohol compound, or the tertiary alcohol compound is not particularly limited, but is preferably 1 to 20, more preferably 1 to 10, and still more preferably 1 or 2. The primary alcohol compound, the secondary alcohol compound, and the tertiary alcohol compound may have a substituent other than the hydroxyl group. Examples of the substituent which may be included include a substituent Z described later.

Each of the aliphatic saturated hydrocarbon and the aliphatic unsaturated hydrocarbon refers to an aliphatic compound composed of carbon atoms and hydrogen atoms, and in the present invention, at least one of methylene groups (-CH₂-) constituting each hydrocarbon may be substituted with a heteroatom such as an oxygen atom and a sulfur atom. That is, the alcohol compound used in the present invention includes a polymerization compound of alkylene glycol, a monoalkyl ether compound, and the like.

The primary alcohol compound is not particularly limited, and specific examples thereof include methanol, ethanol, n-propanol, n-butanol, n-pentanol, n-hexanol, n-heptanol, n-octanol, n-nonanol, n-decanol, 2-ethylhexanol, 2-propylheptanol, n-undecanol, n-dodecanol, n-tridecanol, n-eicosanol, and ethylene glycol.

The secondary alcohol compound is not particularly limited, and specific examples thereof include isopropanol, 2-butanol, propylene glycol monomethyl ether, s-pentanol, s-hexanol, cyclopentanol, cyclohexanol, s-heptanol, s-octanol, s-nonanol, s-decanol, and s-tridecanol.

The tertiary alcohol compound is not particularly limited, and specific examples thereof include tert-butanol, 1-adamantanol, and tert-amyl alcohol.

Examples of the phenol compound include compounds having a hydroxyl group bonded to a benzene ring or to a benzene ring of a fused aromatic ring in which a polycycle including the benzene ring is fused. Among these, a compound having a hydroxyl group bonded to a benzene ring is preferable, and a compound which has a high supply ability (generation ability) of a hydrogen source and functions as a polymerization inhibitor is more preferable. The phenol compound may have a substituent Z other than the hydroxyl group. The substituent Z is not particularly limited, and examples thereof include an alkyl group, a halogen atom, an aryl group, a cyano group, a carboxyl group, an alkoxycarbonyl group, an aryloxycarbonyl group, a carbamoyl group, an alkylcarbonyl group, an arylcarbonyl group, a nitro group, an amino group, an acylamino group, a sulfonamide group (for example, methane sulfonamide), an imido group, an imino group, an alkoxy group, an aryloxy group, an acyloxy group, an alkylsulfonyloxy group, an arylsulfonyloxy group, a sulfo group, a sulfamoyl group, an alkylthio group, an arylthio group, an alkylsulfonyl group, an arylsulfonyl group, and a heterocyclic group. Furthermore, examples of the phenol compound having a substituent include a phenol compound having at least one carboxy group and a hydrate thereof (hydroxybenzoic acid compound).

Specific examples of the phenol compound include hydroquinone, 2,6-di-tert-butyl-p-cresol (dibutylhydroxytoluene), 2,6-di-tert-butylphenol, 6-tert-butyl-2,4-xylenol, p-methoxyphenol, 4- tert-butyl catechol, tert-butyl hydroquinone, 2,4-dinitrophenol, 1,8,9-trihydroxyanthracene, tocopherol, butylhydroxyanisole, propyl gallate, and quercetin. In addition, specific examples of the hydroxybenzoic acid compound include 2-, 3-, or 4-hydroxybenzoic acid, 2,3-, 2,4-, 2,5-, 2,6-, 3,4-, or 3,6-dihydroxybenzoic acid, 2,3,4-, 2,4,6-, or 3,4,5-trihydroxybenzoic acid, and hydrates thereof. Here, the number of water molecules included in the hydrate may be in a range which can be taken by each hydroxybenzoic acid, and examples thereof include 1 to 3 molecules (1 to 3 hydrate).

As the hydroxyl group-containing compound, from the viewpoint that it has a high supply ability of a hydrogen source, and is capable of removing the thiocarbonylthio group at a high removal rate while maintaining the properties of the thiocarbonylthio group-containing polymer (narrow molecular weight distribution), the phenol compound is preferable, and dibutylhydroxytoluene, p-methoxyphenol, 4-tert-butylcatechol, tert-butylhydroquinone, butylhydroxyanisole, a hydroxybenzoic acid compound, or the like is more preferable.

The mixed solution may contain one kind or two or more kinds of hydroxyl group-containing compounds, the alcohol compound and the phenol compound may be used in combination.

### - Solvent -

From the viewpoint that the thiocarbonylthio group-removing reaction can be performed uniformly, the mixed solution used in the removing step preferably contains a solvent.

The solvent is not particularly limited as long as it dissolves the thiocarbonylthio group-containing polymer and the hydroxyl group-containing compound and does not inhibit the thiocarbonylthio group-removing reaction, and a commonly used solvent can be used. Examples thereof include a solvent used for synthesizing the RAFT polymerization polymer, which will be described later. In a case where the removing step is performed using the polymerization reaction product obtained in the synthesizing step described later, the solvent contained in the mixed solution used in the removing step includes a solvent derived from the solvent used in the synthesizing step described later and a solvent newly used in the present step, which is different from the solvent in the synthesizing step described later. The solvent used in the removing step may be the same as or different from the solvent used in the synthesizing step described later.

The mixed solution may contain one kind or two or more kinds of solvents.

### - Other components -

In the removing step, the mixed solution may contain the thiocarbonylthio group-containing polymer and the hydroxyl group-containing compound, and preferably further containing the solvent, and may contain other components.

The other components are not particularly limited, and examples thereof include a component used in the production of a polymer, such as a radical polymerization initiator and a sensitizer.

However, in the removing step, since the thiocarbonylthio group-removing reaction is performed by the light irradiation in the presence of the hydroxyl group-containing compound, it is preferable that the mixed solution does not contain a component other than the thiocarbonylthio group-containing polymer and the hydroxyl group-containing compound. In the present invention, the term "does not contain" includes an aspect in which the content in the mixed solution is 1% by mass or less. In a case where the mixed solution does not contain other components, the thiocarbonylthio group-removed polymer can be purified by a simple purification operation after the thiocarbonylthio group-removing reaction, and a high-purity thiocarbonylthio group-removed polymer can be obtained. In particular, in the present invention, since the thiocarbonylthio group can be removed by the light irradiation in the presence of the hydroxyl group-containing compound, it is not necessary to contain the initiator described in JP2015-505881A (paragraph [0080]) or the like in the mixed solution (coexistence in the reaction system).

The total content of the thiocarbonylthio group-containing polymer, the hydroxyl group-containing compound, and the other components in the mixed solution is not particularly limited, but it is preferably 10% to 90% by mass, and from the viewpoint that the thiocarbonylthio group-removing reaction proceeds more uniformly due to a decrease in viscosity of the mixed solution, it is more preferably 10% to 50% by mass.

The content of the thiocarbonylthio group-containing polymer in the mixed solution is appropriately set in consideration of the above-described total content, and for example, it is preferably 5% to 80% by mass, more preferably 10% to 70% by mass, and still more preferably 10% to 50% by mass. In the removing step, the polymerization reaction product obtained in the synthesizing step described later can be used as it is, but from the viewpoint of proceeding the thiocarbonylthio group-removing reaction more uniformly, it is preferable to set the content within the above-described range by diluting the polymerization reaction product with a solvent.

The content of the hydroxyl group-containing compound in the mixed solution is appropriately determined in consideration of the content of the thiocarbonylthio group in the thiocarbonylthio group-containing polymer, the amount of the thiocarbonylthio group-containing polymer used, the above-described total content, and the like. For example, the hydroxyl group-containing compound is preferably 1 to 500 mol, more preferably 5 to 500 mol, and still more preferably 10 to 500 mol with respect to 1 mol of the content of the thiocarbonylthio group.

The mixed solution can be prepared by pre-mixing the hydroxyl group-containing compound and the thiocarbonylthio group-containing polymer (preferably, the polymerization reaction product obtained in the synthesizing step described later), preferably the solvent, and appropriately the other components under, preferably, an inert gas atmosphere with various commonly used mixers.

### (Other steps)

In the production method according to the embodiment of the present invention, before the removing step, a step of preparing or synthesizing the thiocarbonylthio group-containing polymer can also be performed. In a case where a RAFT polymerization polymer is used as the thiocarbonylthio group-containing polymer, it is preferable to synthesize the RAFT polymerization polymer in the synthesizing step described later.

In addition, the thiocarbonylthio group-removed polymer is recovered by a conventional method after the removing step. In this case, a step of purifying the thiocarbonylthio group-removed polymer can also be performed. As impurities (by-products) after completion of the reaction, unreacted hydroxyl group-containing compounds, decomposition products of the thiocarbonylthio group, and the like are assumed, but in the production method according to the embodiment of the present invention, the impurities can be easily separated, and particularly in a case where the mixed solution does not contain the other components, the amount of impurities is small, the purification can be performed by a simple method, and a high-purity thiocarbonylthio group-removed polymer can be obtained. As a method for purifying the thiocarbonylthio group-removed polymer, various methods commonly used as a purification method for a polymer can be adopted without particular limitation, and examples thereof include a precipitation method (reprecipitation method) and a membrane separation method.

### (Thiocarbonylthio group-removed polymer)

Next, the thiocarbonylthio group-removed polymer obtained by the production method according to the embodiment of the present invention (the removing step) will be described.

The polymer has the same molecular structure (main chain structure and side chain structure) as the thiocarbonylthio group-containing polymer, except that the thiocarbonylthio group of the thiocarbonylthio group-containing polymer is removed. Removing the thiocarbonylthio group is as described above, and examples thereof include an aspect in which the thiocarbonylthio group is substituted with a hydrogen atom, an aspect in which, after the thiocarbonylthio group is substituted with a hydrogen atom, a partial structure in the vicinity of the terminal undergoes a disproportionation reaction and is modified (for example, modified to a terminal vinyl group), an aspect in which the thiocarbonylthio group and a hydrogen atom at a β-position are eliminated to form a double bond, an aspect in which the thiocarbonylthio group is further cleaved and modified to a thiol group (-SH group) (an aspect in which the thiocarbonyl group is substituted with a thiol group), and an aspect in which these aspects are mixed. However, in a case where the RFAT polymerization polymer is used as the thiocarbonylthio group-removed polymer, a cleavage residue of an RAFT polymerization agent other than the thiocarbonylthio group is usually bonded to the other terminal of the main chain of the thiocarbonylthio group-removed polymer.

In the thiocarbonylthio group-removed polymer, since the thiocarbonylthio group is removed with a high removal rate, it is possible to prevent occurrence of coloration and decomposition due to the thiocarbonylthio group. Moreover, since it is obtained by performing a simple treatment under mild conditions, the properties (for example, a predetermined molecular weight) of the thiocarbonylthio group-containing polymer, in particular, a narrow and unimodal molecular weight distribution is maintained. Specifically, the number-average molecular weight and molecular weight distribution of the thiocarbonylthio group-removed polymer have the same ranges as a number-average molecular weight and molecular weight distribution of the RAFT polymerization polymer, which will be described later. Therefore, the thiocarbonylthio group-removed polymer can also be used for dispersion material applications, adhesive material applications, elastomer applications, porous material applications, drug delivery applications, surface modifier applications, and the like, and can be suitably applied to optical applications, patterning materials, life science applications, and the like. Among these, in recent years, it is particularly suitably used for a resist application (for example, a high-resolution resist using extreme ultraviolet light (EUV light)), which is required to form a fine pattern with high precision.

### <Step of synthesizing polymer having thiocarbonylthio group>

The step of synthesizing the polymer having a thiocarbonylthio group (may be simply referred to as a synthesizing step) is not particularly limited, and for example, a known RAF polymerization method can be adopted without particular limitation. From the viewpoint that it is easy to simply realize a high conversion rate, and that it can be performed continuously with the above-described removing step, and further, in one-pot, a step of using a RAFT polymerization method with a rotating photopolymerization reactor is preferable.

### (Rotating photopolymerization reactor)

A rotating photopolymerization reactor used in the synthesizing step of using a RAFT polymerization method with a rotating photopolymerization reactor will be described.

The rotating photopolymerization reactor used in this step has a rotation axis inclined with respect to a vertical direction, and includes a central shaft body for continuously rotating a reaction container around the rotation axis and a reaction container attachable to and detachable from the central shaft body. It is preferable that the rotating photopolymerization reactor includes a light source which irradiates the reaction container (particularly, an upper portion of the reaction container on which a film-like liquid is formed during continuous rotation) with light. A location where the light source is installed can be appropriately determined, and the light source may be installed inside the reaction container or outside the reaction container. In addition, the rotating photopolymerization reactor preferably includes a temperature controller, usually a heater, for adjusting the temperature of the mixed solution in the reaction container, and the temperature controller is usually disposed outside the reaction container, for example, in a lower part near "liquid pool of the mixed solution" described later.

By using the above-described rotating photopolymerization reactor, it is possible to realize a spread-remixing and stirring state described later with good reproducibility under a simple method and conditions of the conditions rotation of the reaction container.

The above-described rotation shaft body is not particularly limited as long as it functions as described above, and examples thereof include a cylindrical body and a tubular body. It is preferable that the rotation shaft body is connected to a drive unit which continuously rotates the reaction container around the above-described rotation axis, and the rotation shaft body rotates continuously together with the attached reaction container. Suitable examples of the rotation shaft body include a body formed of a material having resistance to the mixed solution (for example, resin, glass, and metal). An inclination angle of the rotation axis is not particularly limited as long as the mixed solution can be spread in a form of a film on an inner wall surface of the reaction container and the mixed solution does not flow out of the reaction container, and the inclination angle can be set to 90° (horizontal) or more to the vertical direction, and for example, it is preferably set to more than 0° (vertical) and less than 90°, more preferably set to 10° to 80°, and still more preferably set to 30° to 70°. A rotation speed of the rotation shaft body (reaction container) is set to a rotation speed at which the mixed solution in the reaction container, particularly a liquid pool described later, can be stirred and the mixed solution can be spread in a form of a film on the inner wall surface of the reaction container, and is appropriately determined according to the size of the reaction container, the accommodated amount (container filling rate described later) of the mixed solution in the reaction container, the viscosity of the mixed solution, the polymerization temperature, and the like. In the present invention, for example, the rotation speed can be set to 5 to 1000 rpm (rotation/minute), preferably 10 to 500 rpm and more preferably 30 to 300 rpm.

As the reaction container, a container which is usually used is selected, and as a material thereof, a material which transmits emission light from the light source, for example, glass, quartz, and a transparent resin, is selected. Examples of the reaction container include various flasks made of glass and a tubular body such as a test tube. In the present invention, it is sufficient that the transmission of the emission light from the light source means, for example, transmission to an extent that the RAFT agent mixed has an illuminance which causes a photodecomposition reaction, such as glass which is a material of the flask, and the transmission is not limited to 100% transmittance.

The light source may be any light source which emits emission light including light having a wavelength at which the RAFT agent is photodecomposed (undergoes cleavage reaction), and a light source which is usually used can be used without particular limitation. The wavelength at which the RAFT agent undergoes the cleavage reaction is determined depending on the type of the RAFT agent, and for example, a wavelength of 300 to 500 nm is selected. For the RAFT agent having a thiocarbonylthio group, a wavelength of 400 to 500 nm is preferably selected. Characteristics of the light emitted by the light source are not particularly limited as long as irradiation conditions described later can be realized. Examples of such a light source include sunlight, a fluorescent tube, a light emitting diode (LED), a mercury lamp, an electrodeless lamp, a xenon lamp, a metal halide lamp, and a laser, and from the viewpoint of half-width, intensity of light, life, and cost, LED is preferable.

In addition, one or a plurality of light sources can be arranged, and from the viewpoint of enabling uniform irradiation, it is preferable to arrange a plurality of light sources on the upper portion of the reaction container. Each light source is disposed in a state in which the emitted light is emitted toward the upper portion (portion where the mixed solution is spread) of the reaction container. For example, as for an installation position of each light source, the shortest distance from the reaction container can be set to 0.5 to 20 cm, and is preferably set to 1 to 5 cm. The installation positions (intervals) of the plurality of light sources can be appropriately determined.

In the present invention, it has been described that the light source is used as a constituent element of the rotating photopolymerization reactor, but the light source may be a device which is used separately from the rotating photopolymerization reactor.

The temperature controller may be any one as long as the temperature of the mixed solution can be adjusted, and a commonly used temperature can be used without particular limitation. Examples thereof include a water bath, an oil bath, a heater, and a cooling device.

As the rotating photopolymerization reactor having the above-described structure, various known rotating photopolymerization reactors can be used as they are or by appropriately improving them. Examples thereof include container rotating devices such as a horizontal cylindrical rotating device, a V-shaped rotating device, and a double cone rotating device (see Chemical Engineering Handbook Reference edited by Chemical Engineering Society); a rotary evaporator, Kugelrohr (glass tube oven), and an improved apparatus thereof. Among these, a rotary evaporator or an improved apparatus thereof, which has high general-purpose properties and can flexibly respond to reaction conditions and reaction scales, is preferable.

### (Synthesizing step)

Next, the synthesizing step will be specifically described.

In the synthesizing step, a mixed solution described later is charged or accommodated in the reaction container, and the reaction container is mounted on the central shaft body of the rotating photopolymerization reactor described above. Alternatively, the mixed solution described later is charged or accommodated in the reaction container mounted on the central shaft body of the rotating photopolymerization reactor described above.

The light source is installed outside the reaction container before or after the continuous rotation of the mounted reaction container, and the temperature controller is disposed below the reaction container as necessary and controls the temperature of the mixed solution.

Next, the drive unit is started to irradiate the reaction container with light from the light source while continuously rotating the reaction container around the rotation axis inclined with respect to the vertical direction.

Although it depends on the viscosity of the mixed solution, the rotation speed, and the like, usually, through the above-described series of operations, the mixed solution accommodated in the reaction container is stirred, and a part of the mixed solution is spread in a form of a film on the interior wall of the rotating reaction container. More specifically, the mixed solution is gathered in the reaction container downward in the vertical direction to form a liquid pool, and a part of the mixed solution which has gathered in the liquid pool, which emerges (rotates and floats) from the liquid pool, adheres to the interior wall (surface) of the reaction container, and spreads in a form of a (thin) film. The film-like liquid thus spread rotates together with the reaction container while adhering to the interior wall of the reaction container, and finally remixes (merges, flows in, or mixes) with the liquid pool. In the synthesizing step, spreading (separation) and remixing (sometimes referred to as a spread-remixing and stirring state) of the mixed solution by such rotation are repeatedly performed. In this case, the liquid pool is stirred by the continuous rotation of the reaction container and the remixing of the film-like liquid, and is brought into a fluid state (mixed state). The spread-remixing and stirring state can be realized by, for example, adjusting the concentration of the mixed solution, the rotation speed, and the like in the continuous rotation of the reaction container accommodating the mixed solution, which is mounted on the above-described rotating photopolymerization reactor.

In the synthesizing step in which the formation of the film-like liquid and the remixing into the liquid pool are continuously repeated, spreading the mixed solution on the interior wall of the reaction container in the form of a film includes an aspect in which the mixed solution adheres to the entire surface of the interior wall to form a liquid film and an aspect in which the mixed solution adheres to a part of the interior wall surface in a form of a film, a line, a droplet, or the like. That is, in the synthesizing step, it means that, by remixing the mixed solution adhering to the interior wall of the reaction container into the liquid pool, it is sufficient that the mixed solution adheres to the interior wall of the reaction container in a state in which a radical species is generated to the extent in which the RAFT polymerization reaction occurs in the liquid pool. Therefore, the amount (inner wall area ratio) and thickness of the film-like liquid formed are not particularly limited. For example, the thickness is appropriately set in a range of micrometer order to millimeter order.

In the synthesizing step, the film-like liquid is irradiated with light in the continuous rotation state (spread-remixing and stirring state). Accordingly, the RAFT agent in the film-like liquid causes a photodecomposition (cleavage) reaction to generate a radical species, and the RAFT polymerization reaction proceeds by remixing in the liquid pool. In this case, the liquid pool does not need to be irradiated with light, but may be irradiated with light transmitted through the film-like liquid.

The synthesizing step can also be performed by a batch method in which a predetermined amount of the mixed solution is charged into the reaction container and subjected to the RAFT polymerization reaction, or can also be performed by a continuous method in which the mixed solution is continuously or intermittently charged into the reaction container and subjected to the RAFT polymerization reaction.

Through the above-described series of operations, it is possible to simply produce a thiocarbonylthio group-containing polymer as a RAFT polymerization polymer having a narrow molecular weight distribution, preferably a predetermined molecular weight at a high conversion rate.

The conversion rate (also referred to as a reaction rate) represents a conversion rate of the monomer, and is a percentage of a reacted amount of the monomer which has reacted as the RAFT polymerization reaction to a supply amount of the monomer supplied to the reaction container ((Reacted amount/Supply amount) × 100 (%)).

In a case where a (meth)acrylic polymer is produced in the synthesizing step, the conversion rate can be achieved in 94% or more, preferably 96% or more. In a case of producing polystyrene, the conversion rate can be achieved in 70% or more, preferably 80% or more and more preferably 90% or more.

In the present invention, the conversion rate can be determined by an NMR measurement or a gel permeation chromatography (GPC) measurement described later. Usually, the conversion rate is determined by the NMR measurement, but in a case where the NMR measurement cannot be performed, in a case where the conversion rate cannot be calculated by the NMR measurement, in a case where the NMR measurement is not appropriate, such as a case of tracking the conversion rate, and the like, the conversion rate is determined by a GPC measurement. In any of the methods, the determination is performed by calculating a proportion (%) of a peak surface area of the RAFT polymerization polymer to the total of a peak surface area of the monomer and the peak surface area of the RAFT polymerization polymer in a chart to be obtained. In the NMR measurement method, for example, in a case where methyl methacrylate is used as the monomer to produce a polymer (polymethyl methacrylate), a ¹H-NMR spectrum chart in deuterochloroform is obtained, and the conversion rate is calculated using peak surface areas (integrated values) of methyl ester in each of the monomer and the polymer. In a case where the peaks of each of the monomer and the polymer cannot be divided in the NMR spectrum chart and the conversion rate cannot be calculated, the conversion rate is calculated by the GPC measurement.

The molecular weight and molecular weight distribution of the RAFT polymerization polymer in the synthesizing step will be described later.

Details of the reason why the RAFT polymerization polymer having a narrow molecular weight distribution can be easily produced at a high conversion rate by the synthesizing step have not been clarified yet, but including estimation, it is considered as follows. That is, in the production method according to the embodiment of the present invention, by utilizing the advantage of the RAFT polymerization reaction, that the radical species unique to living radical polymerization is less likely to be deactivated, as described above, the photodecomposition reaction (initiation reaction) of the RAFT agent can occur in the film-like liquid, and each reaction (growth reaction, chain transfer reaction, and the like) can occur mainly in the liquid pool. In the above-described continuous rotation state of the mixed solution, it is considered that this is because, by remixing the radical species generated in the spread film-like liquid, each reaction which occurs subsequent to the photodecomposition reaction can proceed uniformly in the liquid pool effectively stirred.

In the synthesizing step, after completion of the RAFT polymerization reaction, the RAFT polymerization polymer may be recovered, or the reaction mixture after the completion of the reaction can be used as it is for the above-described removing step. In a case where the RAFT polymerization polymer is recovered, a step of purifying the RAFT polymerization polymer can also be performed. As impurities (by-products) after the completion of the reaction, unreacted monomers are assumed, but in the synthesizing step, since the conversion rate of the monomer is high, in particular, in a case where the mixed solution does not contain other components, the amount of impurities is small and the reaction in the removing step is less likely to be inhibited. Therefore, the RAFT polymerization polymer can be used as it is in the above-described removing step. In addition, the RAFT polymerization polymer obtained in the synthesizing step can be purified by a simple method, and can be obtained with high purity. As a method for purifying the RAFT polymerization polymer, various methods commonly used as a purification method for a polymer can be adopted without particular limitation, and examples thereof include a precipitation method (reprecipitation method) and a membrane separation method.

### (Production conditions)

In the synthesizing step, conditions for continuously rotating the reaction container may be set as appropriate as long as it can realize the above-described continuous rotation state, but are preferably set as the following conditions.

The amount of the mixed solution accommodated in the reaction container and the container filling rate ([Accommodated amount of mixed solution (mL)/Volume of reaction container (mL)] × 100 (%)) are both set as appropriate in consideration of the shape and volume of the reaction container, the rotation speed, the inclination angle of the central axis, the viscosity (concentration) of the mixed solution, and the like. The amount of the mixed solution (total amount) can be, for example, 3 to 80 mL with respect to 100 mL reaction container (as the container filling rate, 3% to 80%), preferably 5 to 40 mL (as the container filling rate, 5% to 40%).

The inclination angle and rotation speed of the reaction container have the same meaning as the inclination angle of the rotation axis in the rotating photopolymerization reactor.

The reaction temperature is not particularly limited, but from the viewpoint that it can be produced in a shorter time, it is preferable that the temperature (under heating) exceeds room temperature (25°C), and for example, the temperature is more preferably 40°C to 150°C and still more preferably 50°C to 90°C.

In the synthesizing step, it is preferable that the inside of the reaction container is degassed (deoxidized) and replaced with an inert gas. As a result, oxygen gas or the like, which can inhibit the RAFT polymerization reaction, can be removed, the RAFT polymerization reaction can proceed rapidly and uniformly in an inert gas atmosphere, and it is possible to realize the narrow molecular weight distribution and the high reproducibility. In particular, in the synthesizing step, after deoxygenation and further replacement with the inert gas, the RAFT polymerization polymer having a narrow molecular weight distribution can be produced with high reproducibility while maintaining high conversion rate, both at scale-up and in industrial installations. The inert gas replacement includes an aspect in which the reaction container is filled with the inert gas and an aspect in which the reaction container is circulated with the inert gas, and an appropriate aspect can be selected. In the aspect of circulating the inert gas, the distribution amount is appropriately determined. Examples of the inert gas to be used include various gases commonly used, and examples thereof include nitrogen gas, helium gas, and argon gas.

Conditions for the light irradiation are not particularly limited, and the conditions can be appropriately set to conditions for photodecomposition of the RAFT agent. For example, an illuminance can be set to 0.1 mW/cm² or more, and is usually 0.1 to 10 mW/cm². An emission maximal wavelength is preferably 300 to 500 nm.

Light emitted from the light source may pass through the film-like liquid and be incident on the liquid pool as long as the film-like liquid is preferably irradiated under the above-described irradiation conditions.

In addition, in the synthesizing step, it is also possible to shield light other than the light emitted from the light source, for example, external light (natural light or artificial light in a device installation environment). In a case of shielding the external light, examples thereof include implementation in a dark room and a smoke curtain covering of the reaction container.

An RFAT polymerization reaction time (time required from the start of the light irradiation to the end of the reaction) may be determined by considering a reaction scale, a reaction temperature, and the like depending on the progress of the RAFT polymerization reaction, for example, a time required to reach a predetermined conversion rate. In the synthesizing step, since the RAFT polymerization reaction can proceed rapidly, the setting can be made in a relatively short time. For example, the time can be 1 to 8 hours.

In the synthesizing step, the RAFT polymerization reaction is stopped by the consumption of the monomer, but it can also be stopped by stopping the light irradiation (removal of the light source) or the like.

### (Production scale)

In the synthesizing step, since the RAFT polymerization reaction can proceed uniformly, it is also possible to increase the production scale (industrial production). For example, not only the production in units of grams but also the production in units of 10 grams to 100 grams can be performed, and depending on the scale of the rotating photopolymerization reactor, the production on a kilogram scale or more can also be performed. In the synthesizing step, it is possible to easily produce the RAFT polymerization polymer having a narrow molecular weight distribution, preferably having a predetermined molecular weight, while maintaining the high conversion rate, even in a case where the scale is increased.

### (Mixed solution)

The mixed solution used in the synthesizing step contains a monomer and a RAFT agent, preferably a solvent, and appropriately other components.

### - Monomer -

The monomer may be any polymerizable compound having an ethylenically unsaturated bond, and monomers commonly used in the RAFT polymerization reaction and monomers capable of forming RAFT polymerization polymers suitable for various applications can be used without particular limitation.

Examples of such monomers include vinyl monomers such as a (meth)acrylic monomer, an aromatic vinyl monomer, a carboxylic acid vinyl ester, a conjugated diene monomer, an olefin monomer, a vinyl halide, and a vinylidene halide, and from the viewpoint of its reactivity, a (meth)acrylic monomer is preferable.

Examples of the (meth)acrylic monomer include:
(meth)acrylic acids;
alkyl (meth)acrylates such as methyl (meth)acrylate, ethyl (meth)acrylate, propyl (meth)acrylate, butyl (meth)acrylate, t-butyl (meth)acrylate, pentyl (meth)acrylate, and hexyl (meth)acrylate;
cycloalkyl (meth)acrylates such as 1-methylcyclopentyl (meth)acrylate, 1-ethyl cyclopentyl (meth)acrylate, 1-isopropylcyclopentyl (meth)acrylate, 1-propylcyclopentyl (meth)acrylate, 1-methylcyclohexyl (meth)acrylate, 1-ethylcyclohexyl (meth)acrylate, 1-isopropylcyclohexyl (meth)acrylate, and 1-propylcyclohexyl (meth)acrylate;
(meth)acrylates having a cyclic ester group, such as γ-butyrolactone (meth) acrylate;
(meth)acrylates having a cyclic ether group, such as 3,4-epoxycyclohexyl (meth)acrylate, glycidyl (meth)acrylate, β-methylglycidyl acrylate, and oxetanyl (meth)acrylate;
(meth)acrylic acid esters having a hydroxyl group, such as 2-hydroxyethyl (meth)acrylate, hydroxypropyl (meth)acrylate, hydroxybutyl (meth)acrylate, and caprocactone-modified 2-hydroxyethyl (meth)acrylate; and
ethylene glycol (meth)acrylates such as methoxydiethylene glycol (meth)acrylate, ethoxydiethylene glycol (meth)acrylate, isooctyloxydiethylene glycol (meth)acrylate, phenoxytriethylene glycol (meth)acrylate, methoxytriethylene glycol (meth)acrylate, and methoxypolyethylene glycol (meth)acrylate.

Examples of the aromatic vinyl monomer include styrenes; alkylstyrenes (vinyltoluenes such as o-, m-, and p-methylstyrene, vinylxylenes such as 2,4-dimethylstyrene, p-ethylstyrene, p-isopropylstyrene, p-butylstyrene, p-t-butylstyrene, and the like); α-alkylstyrenes (α-methylstyrene, α-methyl-p-methylstyrene, and the like); alkoxystyrenes (o-, m-, and p-methoxystyrene, p-t-butoxystyrene, and the like); halostyrenes (o-, m-, and p-chlorostyrene, p-bromostyrene, and the like); and styrenesulfonic acid or an alkali metal salt thereof.

Examples of the carboxylic acid vinyl ester include carboxylic acid vinyl esters having 3 to 10 carbon atoms, such as vinyl formate, vinyl acetate, vinyl propionate, and vinyl pivalate.

Examples of the conjugated diene monomer include conjugated dienes having 4 to 16 carbon atoms, such as butadiene, isoprene, chloroprene, neoprene, 1,3-pentadiene, 2,3-dimethyl-1,3-butadiene, piperylene, 3-butyl-1,3-octadiene, and phenyl-1,3-butadiene.

Examples of the olefin monomer include alkenes having 2 to 10 carbon atoms, such as ethylene, propylene, and butene (isobutene and the like).

Examples of the vinyl halide include vinyl fluoride, vinyl chloride, and vinyl bromide.

Examples of the vinylidene halide include vinylidene fluoride, vinylidene chloride, and vinylidene bromide.

Since the RAFT polymerization polymer having a narrow molecular weight distribution and the thiocarbonylthio group-removed polymer can be produced, the present invention is particularly suitable for a production of a polymer for (photo)resist. Therefore, it is preferable that the monomer includes a monomer having a group which is partially eliminated by action of acid to generate a polar group (may be referred to as "acid-decomposable group"). Accordingly, due to the action of acid, a polarity is increased and a solubility in an alkali developer is increased, so that the polymer functions as the polymer for resist.

In a case where the thiocarbonylthio group-removed polymer produced by the production method according to the embodiment of the present invention is used as the polymer for resist, a preferred polymer for resist and repeating units constituting the polymer will be specifically described below. The monomer used in the production method according to the embodiment of the present invention is a vinyl monomer (monomer containing an ethylenically unsaturated bond) which leads to each repeating unit described later, and usually, the monomer is a compound in which a carbon-carbon single bond structure incorporated in a main chain of the polymer for resist, among the repeating units, is replaced with an ethylenically unsaturated bond (carbon-carbon double bond structure).

Description of configuration requirements described below may be made on the basis of representative embodiments in some cases, but the present invention is not limited to such embodiments.

In the present invention, "organic group" refers to a group including at least one carbon atom.

A substituent is preferably a monovalent substituent unless otherwise specified.

"Actinic ray" or "radiation" in the present invention means, for example, a bright line spectrum of a mercury lamp, far ultraviolet rays typified by an excimer laser, extreme ultraviolet rays (EUV light), X-rays, or electron beams (EB).

In addition, in the present invention, "light" means the actinic ray or the radiation.

Unless otherwise specified, "exposure" in the present invention encompasses not only exposure by a bright line spectrum of a mercury lamp, far ultraviolet rays typified by an excimer laser, extreme ultraviolet rays, X-rays, EUV light, or the like, but also drawing by corpuscular beams such as electron beams and ion beams.

A bonding direction of divalent groups cited in the present invention is not limited unless otherwise specified. For example, in a case where Y in a compound represented by Formula "X-Y-Z" is -COO-, Y may be -CO-O- or -O-CO-. In addition, the above-described compound may be "X-CO-O-Z" or "X-O-CO-Z".

In the present invention, an acid dissociation constant (pKa) represents a pKa in an aqueous solution, and is specifically a value determined by computation from a value based on a Hammett's substituent constant and database of publicly known literature values, using the following software package 1.

Software Package 1: Advanced Chemistry Development (ACD/Labs) Software V 8.14 for Solaris (1994 - 2007 ACD/Labs).

In addition, the pKa can also be determined by a molecular orbital computation method. Examples of a specific method therefor include a method for performing calculation by computing H⁺ dissociation free energy in an aqueous solution based on a thermodynamic cycle. With regard to a computation method for H⁺ dissociation free energy, the H⁺ dissociation free energy can be computed by, for example, density functional theory (DFT), but various other methods have been reported in literature and the like, and are not limited thereto. There are a plurality of software applications capable of performing DFT, and examples thereof include Gaussian 16.

As described above, the pKa in the present invention refers to a value determined by computation from a value based on a Hammett's substituent constant and database of publicly known literature values, using the software package 1, but in a case where the pKa cannot be calculated by the method, a value obtained by Gaussian 16 based on density functional theory (DFT) shall be adopted.

In addition, the pKa in the present invention refers to a "pKa in an aqueous solution" as described above, but in a case where the pKa in an aqueous solution cannot be calculated, a "pKa in a dimethyl sulfoxide (DMSO) solution" shall be adopted.

"Solid content" is intended to be components which form the resist film, and does not include a solvent. In addition, even in a case where a component is liquid, the component is included in the solid content as long as the component forms the resist film.

### <Acid-decomposable resin>

The polymer preferably used as the polymer for resist is an acid-decomposable resin (hereinafter, also referred to as "resin (A)"), and is usually used as a resist composition containing the resin (A).

The resist composition may be either a positive tone resist composition or a negative tone resist composition. In addition, the resist composition according to the embodiment of the present invention may be either a resist composition for alkali development or a resist composition for organic solvent development. The resist composition is typically a chemically amplified resist composition.

The resin (A) usually includes a repeating unit having a group having a polarity that increases through decomposition by the action of acid (hereinafter, also referred to as an "acid-decomposable group"), and preferably includes a repeating unit having an acid-decomposable group.

Therefore, in the pattern forming method, typically, in a case where an alkali developer is adopted as a developer, a positive tone pattern is suitably formed, and in a case where an organic developer is adopted as a developer, a negative tone pattern is suitably formed.

As the repeating unit having an acid-decomposable group, a repeating unit having an acid-decomposable group including an unsaturated bond, which will be described later, is preferable.

### (Repeating unit having acid-decomposable group)

The acid-decomposable group is a group which is decomposed by the action of acid to form a polar group. The acid-decomposable group preferably has a structure in which a polar group is protected by a leaving group which is eliminated by action of acid. That is, the resin (A) has a repeating unit having a group which is decomposed by action of acid to generate a polar group. The resin having this repeating unit has an increased polarity by action of acid, an increased solubility in an alkali developer, and a decreased solubility in an organic solvent.

As the polar group, an alkali-soluble group is preferable, and examples thereof include an acidic group, such as a carboxyl group, a phenolic hydroxyl group, a fluorinated alcohol group, a sulfonic acid group, a phosphoric acid group, a sulfonamide group, a sulfonylimide group, an (alkylsulfonyl)(alkylcarbonyl)methylene group, an (alkylsulfonyl)(alkylcarbonyl)imide group, a bis(alkylcarbonyl)methylene group, a bis(alkylcarbonyl)imide group, a bis(alkylsulfonyl)methylene group, a bis(alkylsulfonyl)imide group, a tris(alkylcarbonyl)methylene group, and a tris(alkylsulfonyl)methylene group; and an alcoholic hydroxyl group.

Among those, as the polar group, a carboxyl group, a phenolic hydroxyl group, a fluorinated alcohol group (preferably, a hexafluoroisopropanol group), or a sulfonic acid group is preferable.

Examples of the leaving group which is eliminated by action of acid include groups represented by Formulae (Y1) to (Y4).

Formula (Y1): -C(Rx₁)(Rx₂)(Rx₃)

Formula (Y2): -C(=O)OC(Rx₁)(Rx₂)(Rx₃)

Formula (Y3): -C(R₃₆)(R₃₇)(OR₃₈)

Formula (Y4): -C(Rn)(H)(Ar)

In Formula (Y1) and Formula (Y2), Rx₁ to Rx₃ each independently represent a (linear or branched) alkyl group, a (monocyclic or polycyclic) cycloalkyl group, an (linear or branched) alkenyl group, or a (monocyclic or polycyclic) aryl group. In a case where all of Rx₁ to Rx₃ are (linear or branched) alkyl groups, it is preferable that at least two of Rx₁ to Rx₃ are methyl groups.

Among these, it is preferable that Rx₁ to Rx₃ each independently represent a linear or branched alkyl group, and it is more preferable that Rx₁ to Rx₃ each independently represent a linear alkyl group.

Two of Rx₁ to Rx₃ may be bonded to each other to form a monocycle or a polycycle.

As the alkyl group of Rx₁ to Rx₃, an alkyl group having 1 to 5 carbon atoms, such as a methyl group, an ethyl group, an n-propyl group, an isopropyl group, an n-butyl group, an isobutyl group, and a t-butyl group, is preferable.

As the cycloalkyl group of Rx₁ to Rx₃, a monocyclic cycloalkyl group such as a cyclopentyl group and a cyclohexyl group, or a polycyclic cycloalkyl group such as a norbornyl group, a tetracyclodecanyl group, a tetracyclododecanyl group, and an adamantyl group is preferable.

As the aryl group of Rx₁ to Rx₃, an aryl group having 6 to 10 carbon atoms is preferable, and examples thereof include a phenyl group, a naphthyl group, and an anthryl group.

As the alkenyl group of Rx₁ to Rx₃, a vinyl group is preferable.

A cycloalkyl group is preferable as the ring formed by the bonding of two of Rx₁ to Rx₃. As a cycloalkyl group formed by the bonding of two of Rx₁ to Rx₃, a monocyclic cycloalkyl group such as a cyclopentyl group and a cyclohexyl group, or a polycyclic cycloalkyl group such as a norbornyl group, a tetracyclodecanyl group, a tetracyclododecanyl group, and an adamantyl group is preferable, and a monocyclic cycloalkyl group having 5 or 6 carbon atoms is more preferable.

In the cycloalkyl group formed by the bonding of two of Rx₁ to Rx₃, one of methylene groups constituting the ring may be replaced with a heteroatom such as an oxygen atom, with a group including a heteroatom, such as a carbonyl group, or with a vinylidene group. In addition, in the cycloalkyl group, one or more of the ethylene groups constituting the cycloalkane ring may be replaced with a vinylene group.

With regard to the group represented by Formula (Y1) or Formula (Y2), for example, an aspect in which Rx₁ is a methyl group or an ethyl group and Rx₂ and Rx₃ are bonded to each other to form the above-described cycloalkyl group is preferable.

For example, in a case where the resist composition is a resist composition for EUV exposure, it is also preferable that the alkyl group, cycloalkyl group, alkenyl group, and aryl group represented by Rx₁ to Rx₃ and the ring formed by bonding two of Rx₁ to Rx₃ further have a fluorine atom or an iodine atom as a substituent.

In Formula (Y3), R₃₆ to R₃₈ each independently represent a hydrogen atom or a monovalent organic group. R₃₇ and R₃₈ may be bonded to each other to form a ring. Examples of the monovalent organic group include an alkyl group, a cycloalkyl group, an aryl group, an aralkyl group, and an alkenyl group. It is also preferable that R₃₆ is a hydrogen atom.

The alkyl group, the cycloalkyl group, the aryl group, and the aralkyl group may include a heteroatom such as an oxygen atom, and/or a group including a heteroatom, such as a carbonyl group. For example, in the above-described alkyl group, cycloalkyl group, aryl group, and aralkyl group, one or more of methylene groups may be replaced with a heteroatom such as an oxygen atom and/or with a group including a heteroatom, such as a carbonyl group.

In addition, R₃₈ and another substituent included in the main chain of the repeating unit may be bonded to each other to form a ring. A group formed by the mutual bonding of R₃₈ and another substituent on the main chain of the repeating unit is preferably an alkylene group such as a methylene group.

For example, in a case where the resist composition is a resist composition for EUV exposure, it is also preferable that the monovalent organic group represented by R₃₆ to R₃₈ and the ring formed by bonding R₃₇ and R₃₈ with each other further have a fluorine atom or an iodine atom as a substituent.

In Formula (Y4), Ar represents an aromatic ring group. Rn represents an alkyl group, a cycloalkyl group, or an aryl group. Rn and Ar may be bonded to each other to form a non-aromatic ring. Ar is preferably an aryl group.

For example, in a case where the resist composition is a resist composition for EUV exposure, it is also preferable that the aromatic ring group represented by Ar and the alkyl group, cycloalkyl group, and aryl group represented by Rn further have a fluorine atom or an iodine atom as a substituent.

From the viewpoint that the acid decomposability of the repeating unit is excellent, in a case where a non-aromatic ring is directly bonded to a polar group (or a residue thereof) in a leaving group which protects the polar group, it is also preferable that a ring member atom adjacent to the ring member atom directly bonded to the polar group (or a residue thereof) in the non-aromatic ring has no halogen atom such as a fluorine atom as a substituent.

In addition, the leaving group which is eliminated by action of acid may be a 2-cyclopentenyl group having a substituent (an alkyl group and the like), such as a 3-methyl-2-cyclopentenyl group, and a cyclohexyl group having a substituent (an alkyl group and the like), such as a 1, 1,4,4-tetramethylcyclohexyl group.

As the repeating unit having an acid-decomposable group, a repeating unit represented by Formula (A) is also preferable.

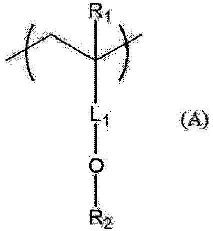

L₁ represents a divalent linking group which may have a fluorine atom or an iodine atom, R₁ represents a hydrogen atom, a fluorine atom, an iodine atom, a fluorine atom, an alkyl group which may have an iodine atom, or an aryl group which may have a fluorine atom or an iodine atom, and R₂ represents a leaving group which is eliminated by action of acid and may have a fluorine atom or an iodine atom. However, at least one of L₁, R₁, or R₂ has a fluorine atom or an iodine atom.

L₁ represents a divalent linking group which may have a fluorine atom or an iodine atom. Examples of the divalent linking group which may have a fluorine atom or an iodine atom include -CO-, -O-, -S-, -SO-, -SO₂-, a hydrocarbon group which may have a fluorine atom or an iodine atom (for example, an alkylene group, a cycloalkylene group, an alkenylene group, an arylene group, and the like), and a linking group formed by the linking of a plurality of these groups. Among these, L₁ is preferably -CO-, an arylene group, or -arylene group-alkylene group having a fluorine atom or an iodine atom-, and more preferably -CO- or -arylene group-alkylene group having a fluorine atom or an iodine atom-.

As the arylene group, a phenylene group is preferable.

The alkylene group may be linear or branched. The number of carbon atoms in the alkylene group is not particularly limited, but is preferably 1 to 10 and more preferably 1 to 3.

The total number of fluorine atoms and iodine atoms included in the alkylene group having a fluorine atom or an iodine atom is not particularly limited, but is preferably 2 or more, more preferably 2 to 10, and still more preferably 3 to 6.

R₁ represents a hydrogen atom, a fluorine atom, an iodine atom, an alkyl group which may have a fluorine atom or an iodine atom, or an aryl group which may have a fluorine atom or an iodine atom.

The alkyl group may be linear or branched. The number of carbon atoms in the alkyl group is not particularly limited, but is preferably 1 to 10 and more preferably 1 to 3.

The total number of fluorine atoms and iodine atoms included in the alkyl group having a fluorine atom or an iodine atom is not particularly limited, but is preferably 1 or more, more preferably 1 to 5, and still more preferably 1 to 3.

The above-described alkyl group may include a heteroatom such as an oxygen atom other than a halogen atom.

R₂ represents a leaving group which is eliminated by action of acid and may have a fluorine atom or an iodine atom. Examples of the leaving group which may have a fluorine atom or an iodine atom include leaving groups which are represented by Formulae (Y1) to (Y4) described above and have a fluorine atom or an iodine atom.

As the repeating unit having an acid-decomposable group, a repeating unit represented by Formula (AI) is also preferable.

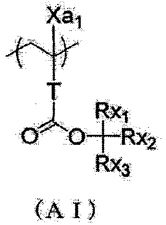

In Formula (AI), Xa₁ represents a hydrogen atom, or an alkyl group which may have a substituent, T represents a single bond or a divalent linking group, and Rx₁ to Rx₃ each independently represent a (linear or branched) alkyl group, a (monocyclic or polycyclic) cycloalkyl group, a (linear or branched) alkenyl group, or a (monocyclic or polycyclic) aryl group, where, in a case where all of Rx₁ to Rx₃ are (linear or branched) alkyl groups, it is preferable that at least two of Rx₁, Rx₂, or Rx₃ are methyl groups, and
two of Rx₁ to Rx₃ may be bonded to each other to form a monocyclic ring or a polycyclic ring (a monocyclic or polycyclic cycloalkyl group and the like).

Examples of the alkyl group which may have a substituent, represented by Xa₁, include a methyl group and a group represented by -CH₂-R₁₁. R₁₁ represents a halogen atom (a fluorine atom or the like), a hydroxyl group, or a monovalent organic group, examples thereof include an alkyl group having 5 or less carbon atoms, which may be substituted with a halogen atom, an acyl group having 5 or less carbon atoms, which may be substituted with a halogen atom, and an alkoxy group having 5 or less carbon atoms, which may be substituted with a halogen atom. Among these, an alkyl group having 3 or less carbon atoms is preferable, and a methyl group is more preferable. Xa₁ is preferably a hydrogen atom, a methyl group, a trifluoromethyl group, or a hydroxymethyl group.

Examples of the divalent linking group of T include an alkylene group, an aromatic ring group, a -COO-Rt- group, and an -O-Rt- group. In the formulae, Rt represents an alkylene group or a cycloalkylene group.

T is preferably a single bond or a -COO-Rt- group. In a case where T represents a -COO-Rt-group, Rt is preferably an alkylene group having 1 to 5 carbon atoms, and more preferably a -CH₂- group, a -(CH₂)₂- group, or a -(CH₂)₃- group.

As the alkyl group of Rx₁ to Rx₃, an alkyl group having 1 to 4 carbon atoms, such as a methyl group, an ethyl group, an n-propyl group, an isopropyl group, an n-butyl group, an isobutyl group, and a t-butyl group, is preferable.

As the cycloalkyl group of Rx₁ to Rx₃, a monocyclic cycloalkyl group such as a cyclopentyl group and a cyclohexyl group, or a polycyclic cycloalkyl group such as a norbornyl group, a tetracyclodecanyl group, a tetracyclododecanyl group, and an adamantyl group is preferable.

As the aryl group of Rx₁ to Rx₃, an aryl group having 6 to 10 carbon atoms is preferable, and examples thereof include a phenyl group, a naphthyl group, and an anthryl group.

As the alkenyl group of Rx₁ to Rx₃, a vinyl group is preferable.

As the cycloalkyl group formed by bonding two of Rx₁ to Rx₃, a monocyclic cycloalkyl group such as a cyclopentyl group and a cyclohexyl group is preferable. In addition, a polycyclic cycloalkyl group such as a norbornyl group, a tetracyclodecanyl group, a tetracyclododecanyl group, and an adamantyl group is preferable. Among these, a monocyclic cycloalkyl group having 5 or 6 carbon atoms is preferable.

In the cycloalkyl group formed by the bonding of two of Rx₁ to Rx₃, for example, one of methylene groups constituting the ring may be replaced with a heteroatom such as an oxygen atom, with a group including a heteroatom, such as a carbonyl group, or with a vinylidene group. In addition, in the cycloalkyl group, one or more of the ethylene groups constituting the cycloalkane ring may be replaced with a vinylene group.

With regard to the repeating unit represented by Formula (AI), for example, an aspect in which Rx₁ is a methyl group or an ethyl group and Rx₂ and Rx₃ are bonded to each other to form the above-described cycloalkyl group is preferable.

In a case where each of the above-described groups has a substituent, examples of the substituent include an alkyl group (having 1 to 4 carbon atoms), a halogen atom, a hydroxyl group, an alkoxy group (having 1 to 4 carbon atoms), a carboxyl group, and an alkoxycarbonyl group (having 2 to 6 carbon atoms). The substituent preferably has 8 or less carbon atoms.

The repeating unit represented by Formula (AI) is preferably an acid-decomposable tertiary alkyl (meth)acrylate ester-based repeating unit (a repeating unit in which Xa₁ represents a hydrogen atom or a methyl group and T represents a single bond).

Specific examples of the repeating unit having an acid-decomposable group are shown below, but the present invention is not limited thereto. In the formulae, Xa₁ represents H, CH₃, CF₃, or CH₂OH, and Rxa and Rxb each independently represent a linear or branched alkyl group having 1 to 5 carbon atoms.

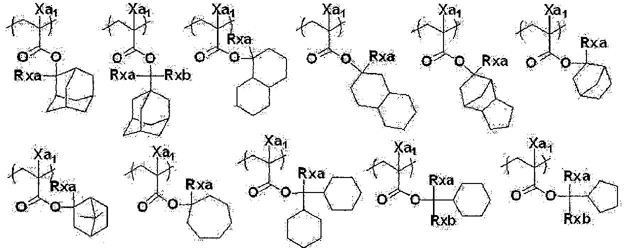

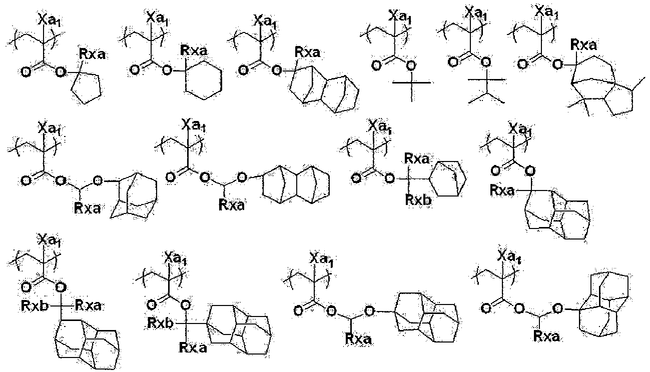

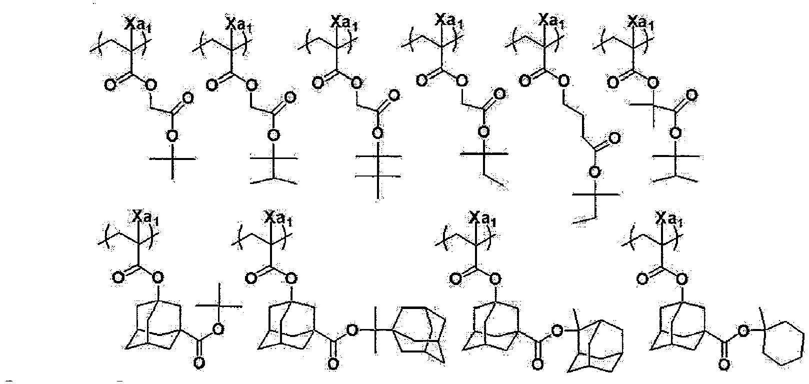

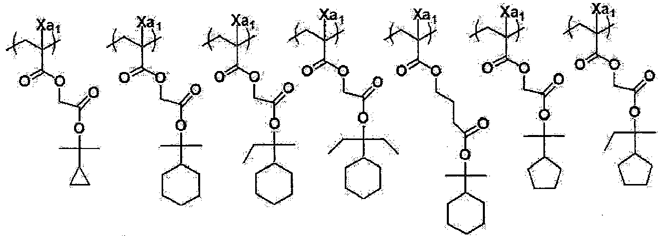

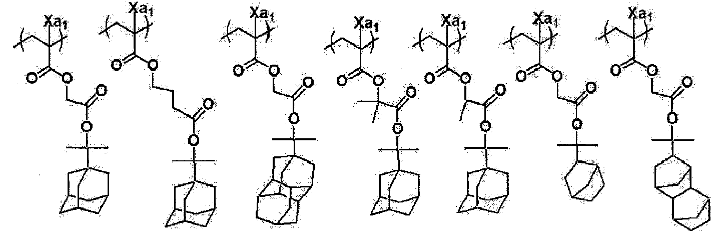

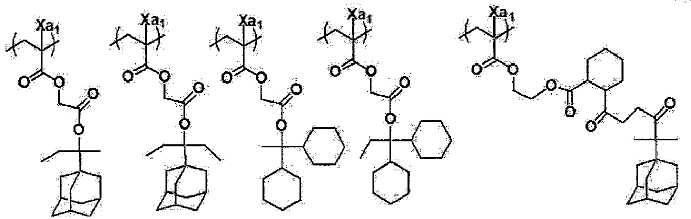

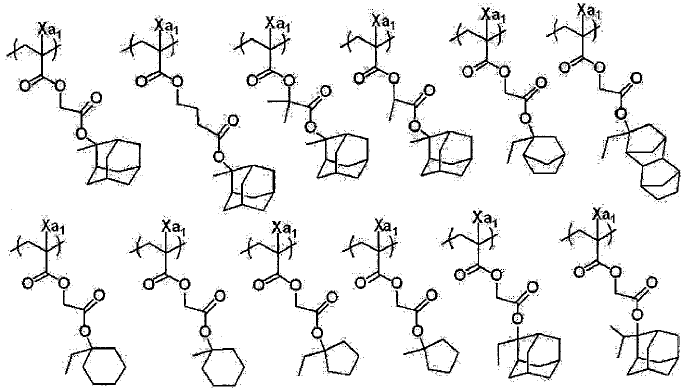

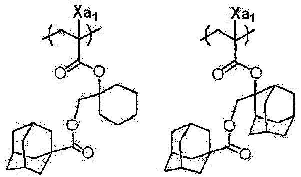

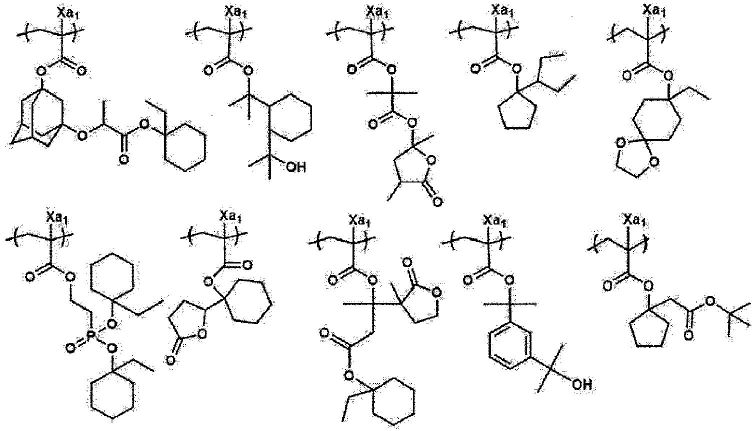

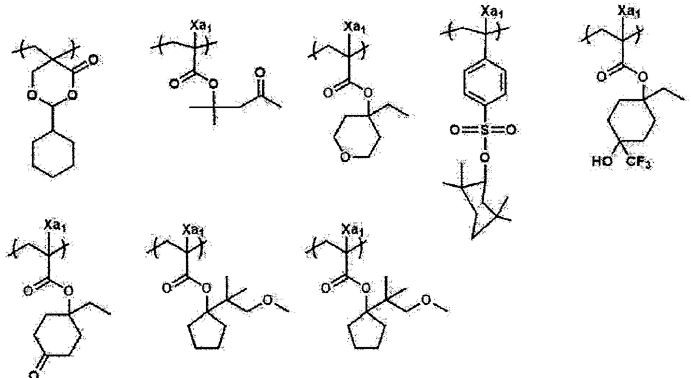

The resin (A) may have, as the repeating unit having an acid-decomposable group, a repeating unit which has an acid-decomposable group including an unsaturated bond.

As the repeating unit having an acid-decomposable group including an unsaturated bond, a repeating unit represented by Formula (B) is preferable.

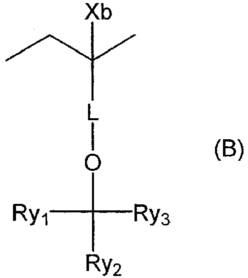

In Formula (B), Xb represents a hydrogen atom, a halogen atom, or an alkyl group which may have a substituent, L represents a single bond or a divalent linking group which may have a substituent, and Ry₁ to Ry₃ each independently represent a linear or branched alkyl group, a monocyclic or polycyclic cycloalkyl group, an alkenyl group, an alkynyl group, or a monocyclic or polycyclic aryl group, where, at least one of Ry₁, Ry₂, or Ry₃ represents an alkenyl group, an alkynyl group, a monocyclic or polycyclic cycloalkenyl group, or a monocyclic or polycyclic aryl group, and

Two of Ry₁ to Ry₃ may be bonded to each other to form a monocycle or a polycycle (monocyclic or polycyclic cycloalkyl group, cycloalkenyl group, or the like).

Examples of the alkyl group which may have a substituent, represented by Xb, include a methyl group and a group represented by -CH₂-R₁₁. R₁₁ represents a halogen atom (a fluorine atom or the like), a hydroxyl group, or a monovalent organic group, examples thereof include an alkyl group having 5 or less carbon atoms, which may be substituted with a halogen atom, an acyl group having 5 or less carbon atoms, which may be substituted with a halogen atom, and an alkoxy group having 5 or less carbon atoms, which may be substituted with a halogen atom. Among these, an alkyl group having 3 or less carbon atoms is preferable, and a methyl group is more preferable. Xb is preferably a hydrogen atom, a fluorine atom, a methyl group, a trifluoromethyl group, or a hydroxymethyl group.

Examples of the divalent linking group of L include a -Rt- group, a -CO- group, a -COO-Rt- group, a -COO-Rt-CO- group, a -Rt-CO- group, and an -O-Rt- group. In the formulae, Rt represents an alkylene group, a cycloalkylene group, or an aromatic ring group, and an aromatic ring group is preferable.

L is preferably a -Rt- group, a -CO- group, a -COO-Rt-CO- group, or a -Rt-CO-group. Rt may have a substituent such as a halogen atom, a hydroxyl group, and an alkoxy group. An aromatic group is preferable.

As the alkyl group of Ry₁ to Ry₃, an alkyl group having 1 to 4 carbon atoms, such as a methyl group, an ethyl group, an n-propyl group, an isopropyl group, an n-butyl group, an isobutyl group, and a t-butyl group, is preferable.

As the cycloalkyl group of Ry₁ to Ry₃, a monocyclic cycloalkyl group such as a cyclopentyl group and a cyclohexyl group, or a polycyclic cycloalkyl group such as a norbornyl group, a tetracyclodecanyl group, a tetracyclododecanyl group, and an adamantyl group is preferable.

As the aryl group of Ry₁ to Ry₃, an aryl group having 6 to 10 carbon atoms is preferable, and examples thereof include a phenyl group, a naphthyl group, and an anthryl group.

As the alkenyl group of Ry₁ to Ry₃, a vinyl group is preferable.

As the alkynyl group of Ry₁ to Ry₃, an ethynyl group is preferable.

As the cycloalkenyl group of Ry₁ to Ry₃, a structure in which a part of a monocyclic cycloalkyl group such as a cyclopentyl group and a cyclohexyl group includes a double bond is preferable.

As the cycloalkyl group formed by the bonding of two of Ry₁ to Ry₃, a monocyclic cycloalkyl group such as a cyclopentyl group and a cyclohexyl group, or a polycyclic cycloalkyl group such as a norbornyl group, a tetracyclodecanyl group, a tetracyclododecanyl group, and an adamantyl group is preferable. Among these, a monocyclic cycloalkyl group having 5 or 6 carbon atoms is more preferable.

In the cycloalkyl group or cycloalkenyl group formed by the bonding of two of Ry₁ to Ry₃, for example, one of methylene groups constituting the ring may be replaced with a heteroatom such as an oxygen atom, with a group including a heteroatom, such as a carbonyl group, a -SO₂- group, and a -SO₃- group, with a vinylidene group, or with a combination of these groups. In addition, in the cycloalkyl group or cycloalkenyl group, one or more of the ethylene groups constituting the cycloalkane ring or cycloalkene ring may be replaced with a vinylene group.

With regard to the repeating unit represented by Formula (B), for example, an aspect in which Ry₁ is a methyl group, an ethyl group, a vinyl group, an allyl group, or an aryl group and Ry₂ and Rx₃ are bonded to each other to form the above-described cycloalkyl group or cycloalkenyl group is preferable.

In a case where each of the above-described groups has a substituent, examples of the substituent include an alkyl group (having 1 to 4 carbon atoms), a halogen atom, a hydroxyl group, an alkoxy group (having 1 to 4 carbon atoms), a carboxyl group, and an alkoxycarbonyl group (having 2 to 6 carbon atoms). The substituent preferably has 8 or less carbon atoms.

The repeating unit represented by Formula (B) is preferably an acid-decomposable (meth)acrylic acid tertiary ester-based repeating unit (repeating unit in which Xb represents a hydrogen atom or a methyl group and L represents a -CO- group), an acid-decomposable hydroxystyrene tertiary alkyl ether-based repeating unit (repeating unit in which Xb represents a hydrogen atom or a methyl group and L represents a phenyl group), or an acid-decomposable styrene carboxylic acid tertiary ester-based repeating unit (repeating unit in which Xb represents a hydrogen atom or a methyl group and L represents a -Rt-CO- group (Rt is an aromatic group)).

A content of the repeating unit having an acid-decomposable group including an unsaturated bond is preferably 15% by mole or more, more preferably 20% by mole or more, and still more preferably 30% by mole or more with respect to all repeating units in the resin (A). In addition, the upper limit value thereof is preferably 80% by mole or less, more preferably 70% by mole or less, and particularly preferably 60% by mole or less with respect to all repeating units in the resin (A).

Specific examples of the repeating unit having an acid-decomposable group including an unsaturated bond are shown below, but the present invention is not limited thereto. In the formulae, Xb and L₁ represent any of the above-described substituents or linking groups; Ar represents an aromatic group; R represents a substituent such as a hydrogen atom, an alkyl group, a cycloalkyl group, an aryl group, an aralkyl group, an alkenyl group, a hydroxyl group, an alkoxy group, an acyloxy group, a cyano group, a nitro group, an amino group, a halogen atom, an ester group (-OCOR‴ or -COOR‴; R‴ is an alkyl group or fluorinated alkyl group having 1 to 20 carbon atoms), and a carboxyl group; R' represents a linear or branched alkyl group, a monocyclic or polycyclic cycloalkyl group, an alkenyl group, an alkynyl group, or a monocyclic or polycyclic aryl group; Q represents a heteroatom such as an oxygen atom, a group containing a heteroatom, such as a carbonyl group, -SO₂- group, and -SO₃- group, a vinylidene group, or a combination thereof; and n and m represent an integer of 0 or more.

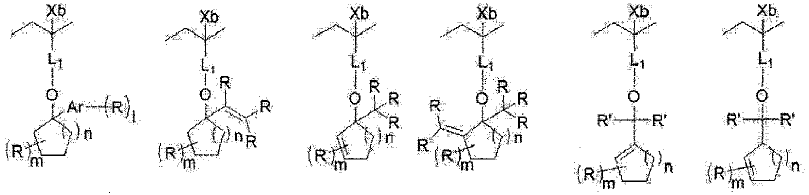

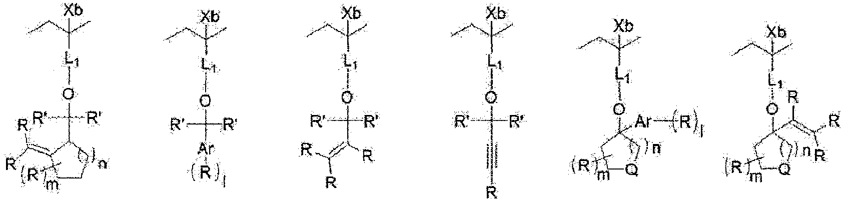

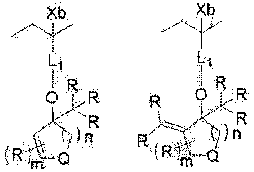

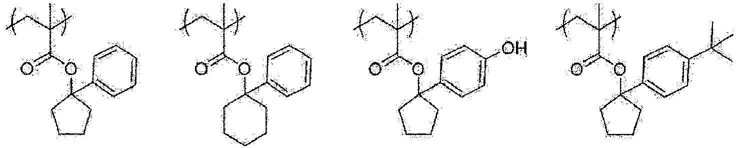

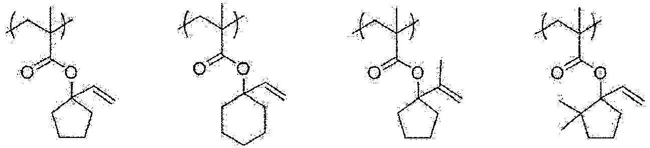

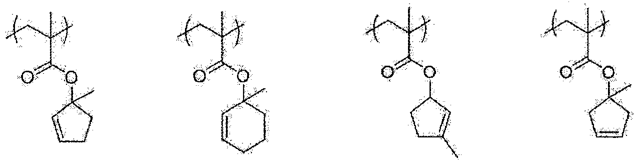

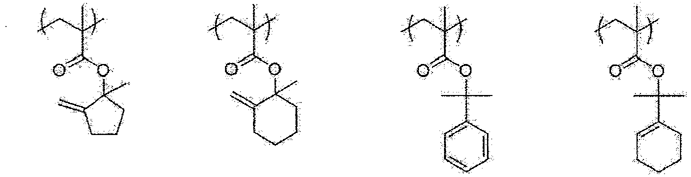

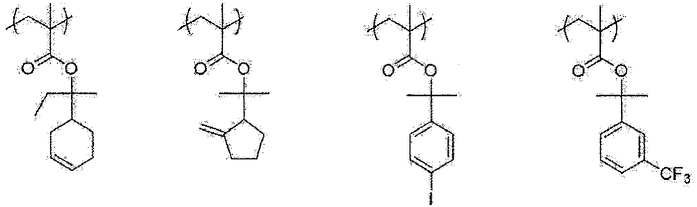

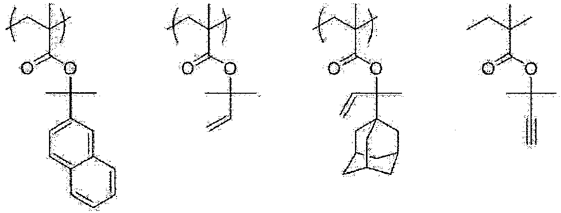

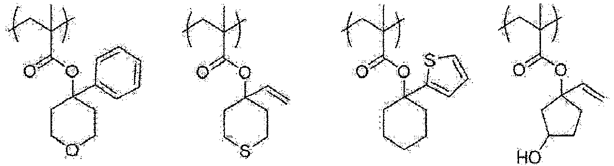

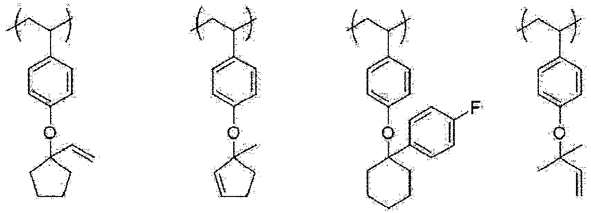

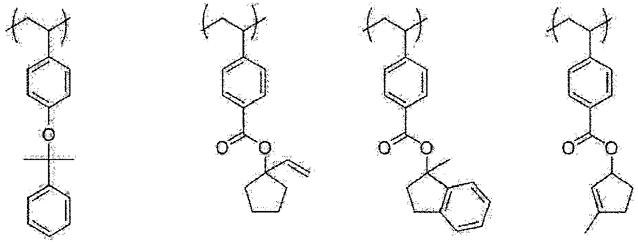

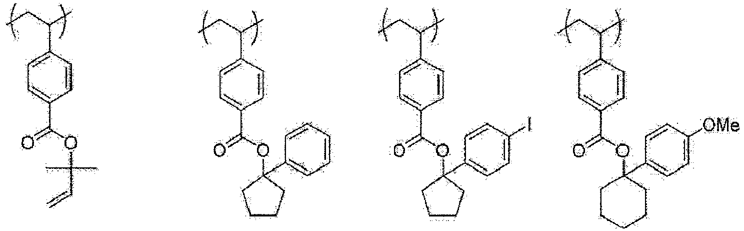

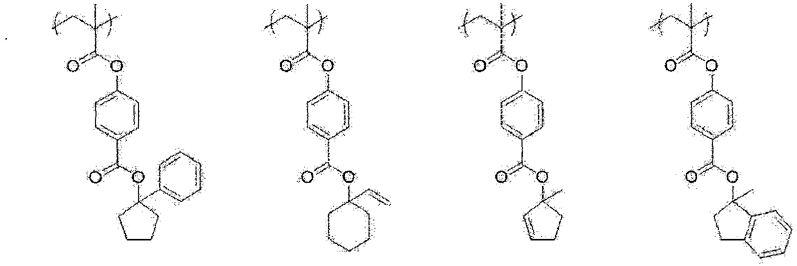

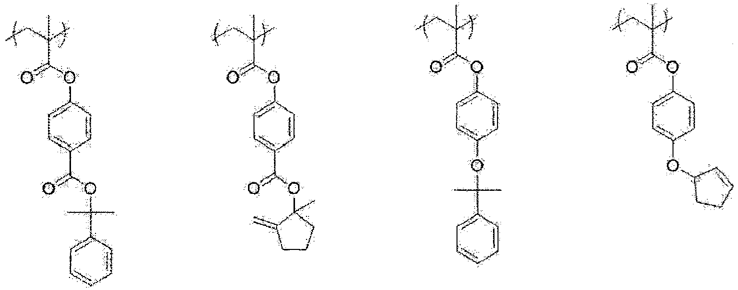

A content of the repeating unit having an acid-decomposable group is preferably 15% by mole or more, more preferably 20% by mole or more, and still more preferably 30% by mole or more with respect to all repeating units in the resin (A). In addition, the upper limit value thereof is preferably 90% by mole or less, more preferably 80% by mole or less, still more preferably 70% by mole or less, and particularly preferably 60% by mole or less with respect to all repeating units in the resin (A).

The resin (A) may include at least one repeating unit selected from the following group A and/or at least one repeating unit selected from the following group B.

### Group A: group consisting of the following repeating units (20) to (29)

(20) repeating unit having an acid group, which will be described later
(21) repeating unit having neither an acid-decomposable group nor an acid group and having a fluorine atom, a bromine atom, or an iodine atom, which will be described later
(22) repeating unit having a lactone group, a sultone group, or a carbonate group, which will be described later
(23) repeating unit having a photoacid generating group, which will be described later
(24) repeating unit represented by Formula (V-1) or Formula (V-2), which will be described later
(25) repeating unit represented by Formula (A), which will be described later
(26) repeating unit represented by Formula (B), which will be described later
(27) repeating unit represented by Formula (C), which will be described later
(28) repeating unit represented by Formula (D), which will be described later
(29) repeating unit represented by Formula (E), which will be described later Group B: group consisting of the following repeating units (30) to (32)
(30) repeating unit having at least one group selected from a lactone group, a sultone group, a carbonate group, a hydroxyl group, a cyano group, or an alkali-soluble group, which will be described later
(31) repeating unit having an alicyclic hydrocarbon structure and not exhibiting acid decomposability, which will be described later
(32) repeating unit represented by Formula (III) having neither a hydroxyl group nor a cyano group, which will be described later

The resin (A) preferably has an acid group, and preferably includes a repeating unit having an acid group. The definition of the acid group will be described later together with a suitable aspect of the repeating unit having an acid group. In a case where the resin (A) has an acid group, interaction the resin (A) and the acid generated from the photoacid generator is more excellent. As a result, diffusion of the acid is further suppressed, and a cross-sectional shape of the formed pattern can be more rectangular.

In a case where the resist composition is used as an actinic ray-sensitive or radiation-sensitive resin composition with EUV, it is preferable that the resin (A) has at least one repeating unit selected from the group consisting of the above-described group A.

In addition, in a case where the resist composition is used as an actinic ray-sensitive or radiation-sensitive resin composition with EUV, it is preferable that the resin (A) includes at least one of a fluorine atom or an iodine atom. In a case where the resin (A) includes both a fluorine atom and an iodine atom, the resin (A) may have one repeating unit including both a fluorine atom and an iodine atom, and the resin (A) may include two kinds of repeating units, that is, a repeating unit having a fluorine atom and a repeating unit having an iodine atom.

In addition, in a case where the resist composition is used as an actinic ray-sensitive or radiation-sensitive resin composition with EUV, it is also preferable that the resin (A) has a repeating unit having an aromatic group.

In a case where the resist composition is used as an actinic ray-sensitive or radiation-sensitive resin composition with ArF, it is preferable that the resin (A) has at least one repeating unit selected from the group consisting of the above-described group B.

In a case where the resist composition is used as an actinic ray-sensitive or radiation-sensitive resin composition with ArF, it is preferable that the resin (A) does not include a fluorine atom and a silicon atom.

In addition, in a case where the resist composition is used as an actinic ray-sensitive or radiation-sensitive resin composition with ArF, it is preferable that the resin (A) does not have an aromatic group.

### (Repeating unit having acid group)

The resin (A) may have a repeating unit having an acid group.

As the acid group, an acid group having a pKa of 13 or less is preferable. An acid dissociation constant of the above-described acid group is preferably 13 or less, more preferably 3 to 13, and still more preferably 5 to 10.

In a case where the resin (A) has an acid group having a pKa of 13 or less, a content of the acid group in the resin (A) is not particularly limited, but is usually 0.2 to 6.0 mmol/g. Among these, 0.8 to 6.0 mmol/g is preferable, 1.2 to 5.0 mmol/g is more preferable, and 1.6 to 4.0 mmol/g is still more preferable. In a case where the content of the acid group is within the above-described range, the development proceeds satisfactorily, the formed pattern shape is excellent, and the resolution is also excellent.

As the acid group, for example, a carboxyl group, a phenolic hydroxyl group, a fluoroalcohol group (preferably, a hexafluoroisopropanol group), a sulfonic acid group, a sulfonamide group, or an isopropanol group is preferable.

In addition, in the above-described hexafluoroisopropanol group, one or more (preferably one or two) fluorine atoms may be substituted with a group (an alkoxycarbonyl group and the like) other than a fluorine atom.

-C(CF₃)(OH)-CF₂- formed as above is also preferable as the acid group. In addition, one or more fluorine atoms may be substituted with a group other than a fluorine atom to form a ring including -C(CF₃)(OH)-CF₂-.

The repeating unit having an acid group is preferably a repeating unit different from the repeating unit having the structure in which a polar group is protected by the leaving group which is eliminated by action of acid as described above, and the repeating unit having a lactone group, a sultone group, or a carbonate group, which will be described later.

The repeating unit having an acid group may have a fluorine atom or an iodine atom.

Examples of the repeating unit having an acid group include the following repeating units.

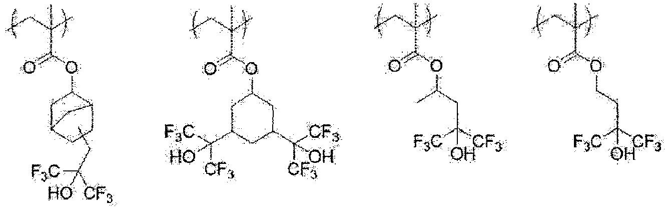

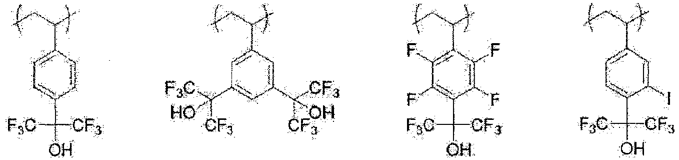

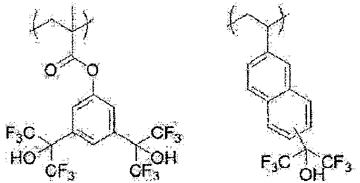

As the repeating unit having an acid group, a repeating unit represented by Formula (1) is preferable.

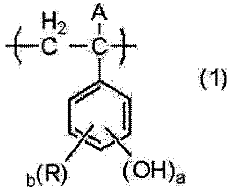

In Formula (1), A represents a hydrogen atom, an alkyl group, a cycloalkyl group, a halogen atom, or a cyano group, R represents a halogen atom, an alkyl group, a cycloalkyl group, an aryl group, an alkenyl group, an aralkyl group, an alkoxy group, an alkylcarbonyloxy group, an alkylsulfonyloxy group, an alkyloxycarbonyl group, or an aryloxycarbonyl group, where in a case of a plurality of R's, the plurality of R's may be the same or different from each other, in a case where a plurality of R's are present, the plurality of R's may be combined with each other to form a ring, R is preferably a hydrogen atom. a represents an integer of 1 to 3, and b represents an integer of 0 to (5 - a).

The repeating unit having an acid group is exemplified below. In the formulae, a represents 1 or 2.

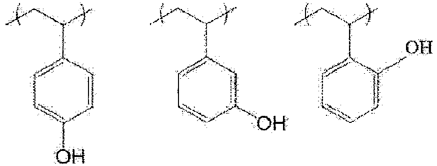

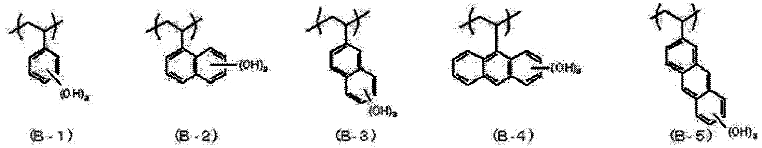

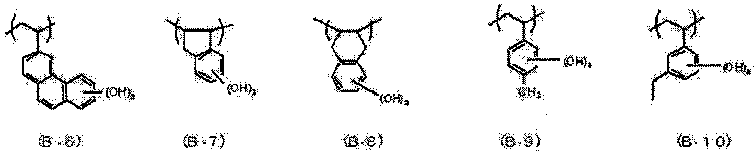

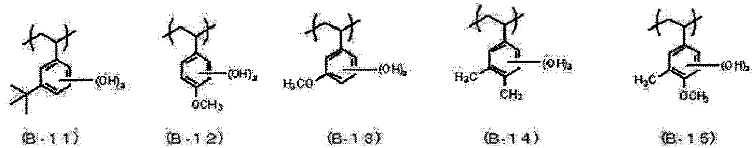

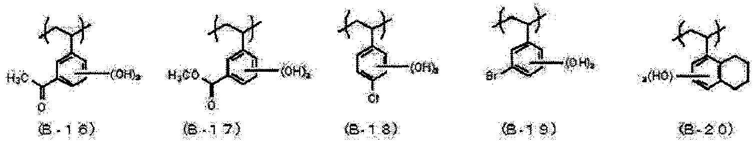

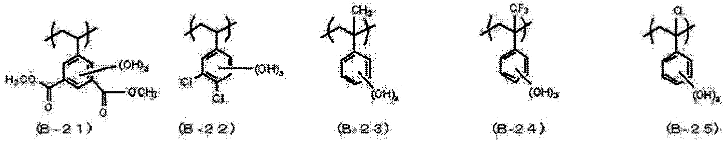

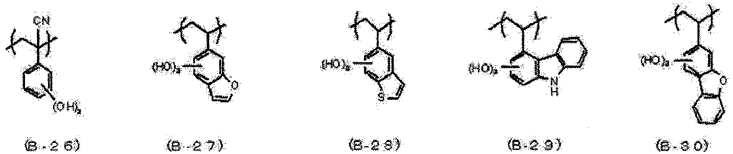

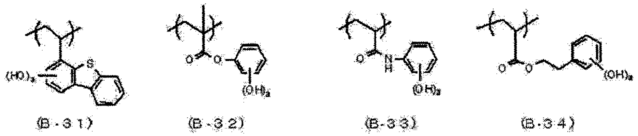

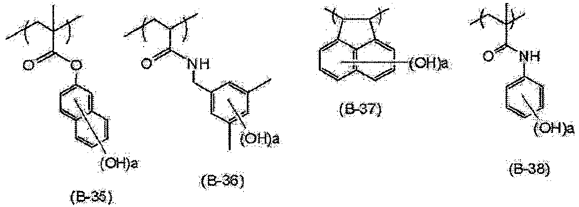

Among the above-described repeating units, repeating units specifically shown below are more preferable. In the formulae, R represents a hydrogen atom or a methyl group, and a represents 2 or 3.

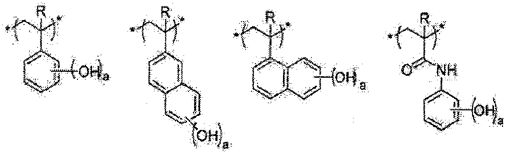

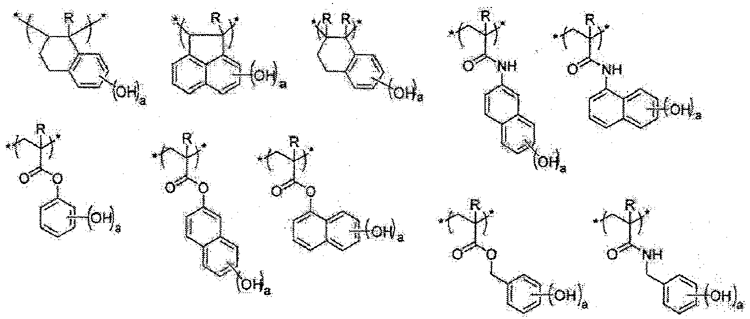

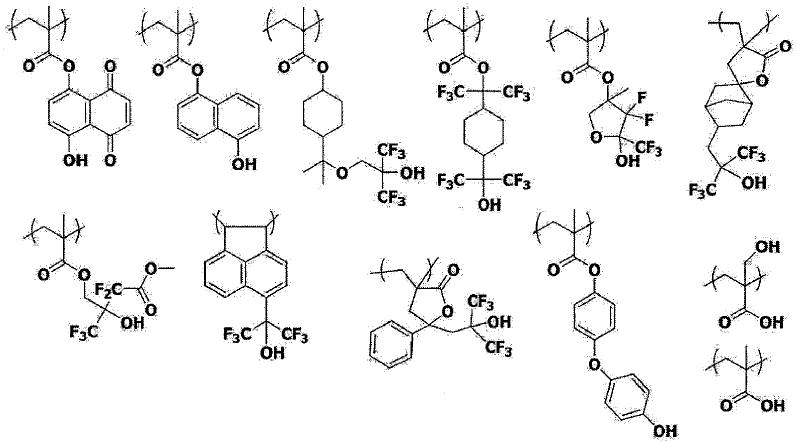

A content of the repeating unit having an acid group is preferably 10% by mole or more, and more preferably 15% by mole or more with respect to all repeating units in the resin (A). In addition, the upper limit value thereof is preferably 70% by mole or less, more preferably 65% by mole or less, and still more preferably 60% by mole or less with respect to all repeating units in the resin (A).

### (Repeating Unit Having Neither Acid-decomposable Group Nor Acid Group and Having Fluorine Atom, Bromine Atom, or Iodine Atom)

The resin (A) may have a repeating unit having neither an acid-decomposable group nor an acid group and having a fluorine atom, a bromine atom, or an iodine atom (hereinafter, also referred to as a unit X), in addition to the above-described "repeating unit having acid-decomposable group" and "repeating unit having acid group". In addition, it is preferable that the "repeating unit having neither an acid-decomposable group nor an acid group and having a fluorine atom, a bromine atom, or an iodine atom" herein is different from other types of the repeating units belonging to the group A, such as "repeating unit having lactone group, sultone group, or carbonate group" and "repeating unit having photoacid generating group" described later.

As the unit X, a repeating unit represented by Formula (C) is preferable.

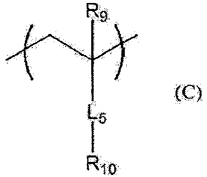

L₅ represents a single bond or an ester group. R₉ represents a hydrogen atom or an alkyl group which may have a bromine atom, a fluorine atom, or an iodine atom. R₁₀ represents a hydrogen atom, an alkyl group which may have a bromine atom, a fluorine atom, or an iodine atom, a cycloalkyl group which may have a fluorine atom, a bromine atom, or an iodine atom, an aryl group which may have a fluorine atom, a bromine atom, or an iodine atom, or a group formed by a combination thereof.

A content of the unit X a is preferably 0% by mole or more, more preferably 5% by mole or more, and still more preferably 10% by mole or more with respect to all repeating units in the resin (A). In addition, the upper limit value thereof is preferably 50% by mole or less, more preferably 45% by mole or less, and still more preferably 40% by mole or less with respect to all repeating units in the resin (A).

The total content of the repeating unit including at least any one of a fluorine atom, a bromine atom, or an iodine atom in the repeating units of the resin (A) is preferably 10% by mole or more, more preferably 20% by mole or more, still more preferably 30% by mole or more, and particularly preferably 40% by mole or more with respect to all repeating units of the resin (A). The upper limit value thereof is not particularly limited, and is, for example, 100% by mole or less with respect to all repeating units of the resin (A).

Examples of the repeating unit including at least any one of a fluorine atom, a bromine atom, or an iodine atom include a repeating unit having a fluorine atom, a bromine atom, or an iodine atom and having an acid-decomposable group, a repeating unit having a fluorine atom, a bromine atom, or an iodine atom and having an acid group, and a repeating unit having a fluorine atom, a bromine atom, or an iodine atom.

### (Repeating unit having lactone group, sultone group, or carbonate group)

The resin (A) may have a repeating unit having at least one selected from the group consisting of a lactone group, a sultone group, and a carbonate group (hereinafter, also referred to as "unit Y").

It is also preferable that the unit Y has no hydroxyl group and acid group such as a hexafluoropropanol group.

The lactone group or the sultone group may have a lactone structure or a sultone structure. The lactone structure or the sultone structure is preferably a 5- to 7-membered ring lactone structure or a 5- to 7-membered ring sultone structure. Among these, the structure is more preferably a 5- to 7-membered ring lactone structure with which another ring structure is fused so as to form a bicyclo structure or a spiro structure or a 5- to 7-membered ring sultone structure with which another ring structure is fused so as to form a bicyclo structure or a spiro structure.

The resin (A) preferably has a repeating unit having a lactone group or a sultone group, formed by extracting one or more hydrogen atoms from a ring member atom of a lactone structure represented by any of Formulae (LC1-1) to (LC1-21) or a sultone structure represented by any of Formulae (SL1-1) to (SL1-3).

In addition, the lactone group or the sultone group may be bonded directly to the main chain. For example, a ring member atom of the lactone group or the sultone group may constitute the main chain of the resin (A).

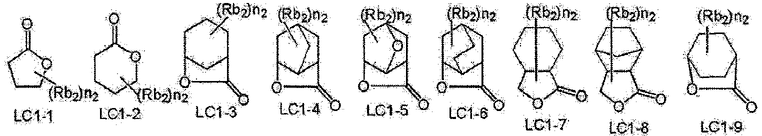

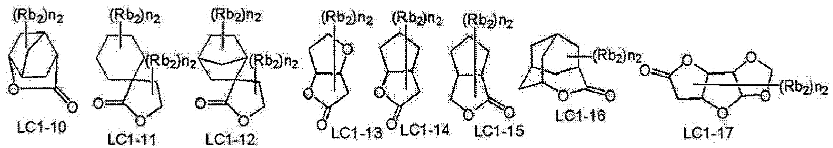

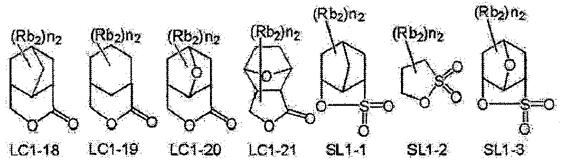

The above-described lactone structure or sultone structure may have a substituent (Rb₂). Preferred examples of the substituent (Rb₂) include an alkyl group having 1 to 8 carbon atoms, a cycloalkyl group having 4 to 7 carbon atoms, an alkoxy group having 1 to 8 carbon atoms, an alkoxycarbonyl group having 1 to 8 carbon atoms, a carboxyl group, a halogen atom, a cyano group, and an acid-decomposable group. n2 represents an integer of 0 to 4. In a case where n2 is 2 or more, a plurality of Rb₂'s may be different from each other, and the plurality of Rb₂'s may be bonded to each other to form a ring.

Examples of the repeating unit having a group including the lactone structure represented by any of Formulae (LC1-1) to (LC1-21) or the sultone structure represented by any of Formulae (SL1-1) to (SL1-3) include a repeating unit represented by Formula (AI).

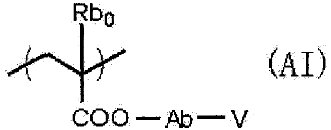

In Formula (AI), Rb₀ represents a hydrogen atom, a halogen atom, or an alkyl group having 1 to 4 carbon atoms. Preferred examples of the substituent which may be contained in the alkyl group of Rb₀ include a hydroxyl group and a halogen atom.

Examples of the halogen atom of Rb₀ include a fluorine atom, a chlorine atom, a bromine atom, and an iodine atom. Rb₀ is preferably a hydrogen atom or a methyl group.

Ab represents a single bond, an alkylene group, a divalent linking group having a monocyclic or polycyclic alicyclic hydrocarbon structure, an ether group, an ester group, a carbonyl group, a carboxyl group, or a divalent group formed by a combination thereof. Among these, as Ab, a single bond or a linking group represented by -Ab₁-CO₂- is preferable. Ab₁ is a linear or branched alkylene group, or a monocyclic or polycyclic cycloalkylene group, and is preferably a methylene group, an ethylene group, a cyclohexylene group, an adamantylene group, or a norbomylene group.

V represents a group formed by extracting one hydrogen atom from a ring member atom of the lactone structure represented by any of Formulae (LC1-1) to (LC1-21) or a group formed by extracting one hydrogen atom from a ring member atom of the sultone structure represented by any of Formulae (SL1-1) to (SL1-3).

In a case where an optical isomer is present in the repeating unit having a lactone group or a sultone group, any of optical isomers may be used. In addition, one optical isomer may be used alone or a mixture of a plurality of the optical isomers may be used. In a case where one kind of optical isomers is mainly used, an optical purity (ee) thereof is preferably 90 or more, and more preferably 95 or more.

As the carbonate group, a cyclic carbonate ester group is preferable.

As the repeating unit having a cyclic carbonate ester group, a repeating unit represented by Formula (A-1) is preferable.

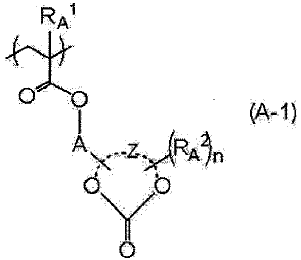

In Formula (A-1), R_{A}¹ represents a hydrogen atom, a halogen atom, or a monovalent organic group (preferably a methyl group). n represents an integer of 0 or more. R_{A}² represents a substituent. In a case where n is 2 or more, a plurality of R_{A}²'s may be the same or different from each other. A represents a single bond or a divalent linking group. As the above-described divalent linking group, an alkylene group, a divalent linking group having a monocyclic or polycyclic alicyclic hydrocarbon structure, an ether group, an ester group, a carbonyl group, a carboxyl group, or a divalent group formed by a combination thereof is preferable. Z represents an atomic group which forms a monocycle or polycycle with a group represented by -O-CO-O- in the formula.

The unit Y is exemplified below. In the following units, Me represents a methyl group.
(in the formulae, Rx is H, CH₃, CH₂OH, or CF₃) 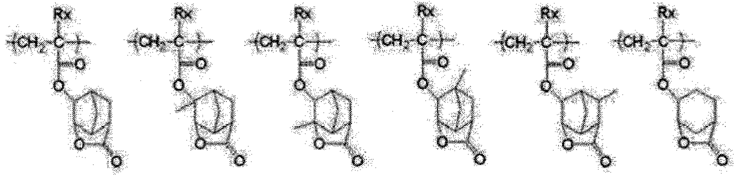 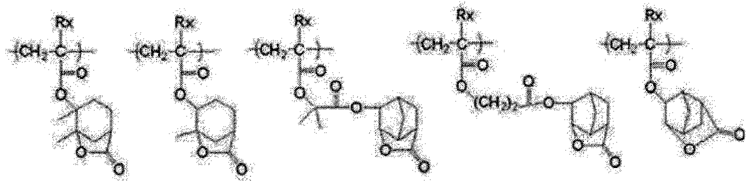 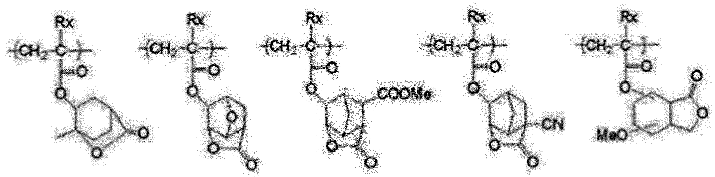 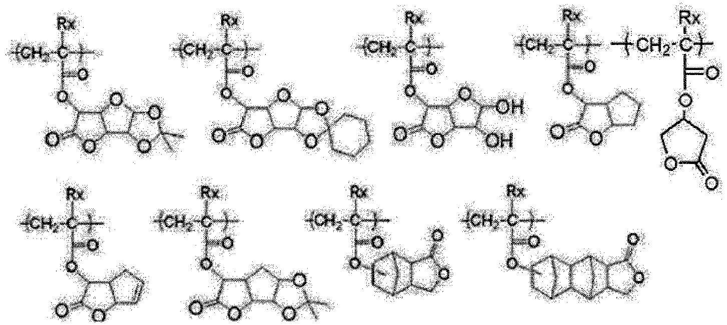 (in the formulae, Rx is H, CH₃, CH₂OH, or CF₃) 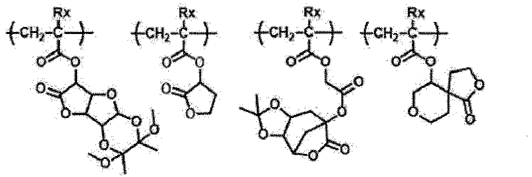 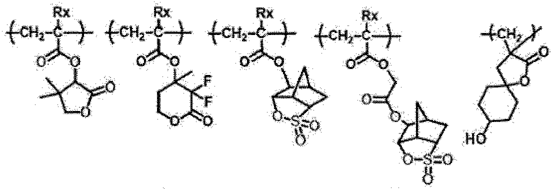 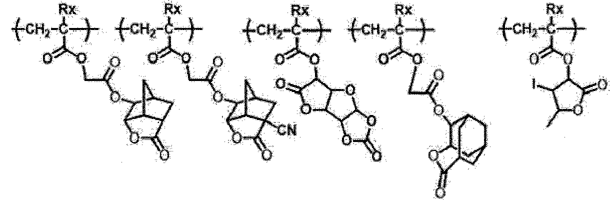 (in the formulae, Rx is H, CH₃, CH₂OH, or CF₃)

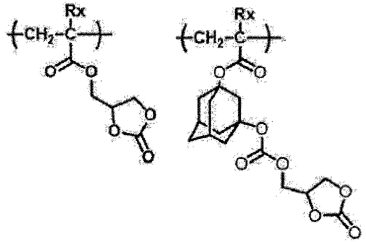

A content of the unit Y is preferably 1% by mole or more, and more preferably 10% by mole or more with respect to all repeating units in the resin (A). In addition, the upper limit value thereof is preferably 85% by mole or less, more preferably 80% by mole or less, still more preferably 70% by mole or less, and particularly preferably 60% by mole or less with respect to all repeating units in the resin (A).

### (Repeating unit having photoacid generating group)

The resin (A) may have, as a repeating unit other than those described above, a repeating unit having a group which generates an acid by irradiation with actinic ray or radiation (hereinafter, also referred to as a "photoacid generating group").

Examples of the repeating unit having a photoacid generating group include a repeating unit represented by Formula (4).

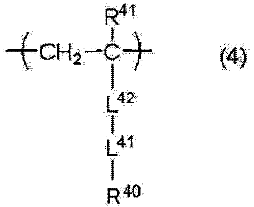

R⁴¹ represents a hydrogen atom or a methyl group. L⁴¹ represents a single bond or a divalent linking group. L⁴² represents a divalent linking group. R⁴⁰ represents a structural moiety which is decomposed by irradiation with actinic ray or radiation to generate an acid in a side chain.

The repeating unit having a photoacid generating group is exemplified below.

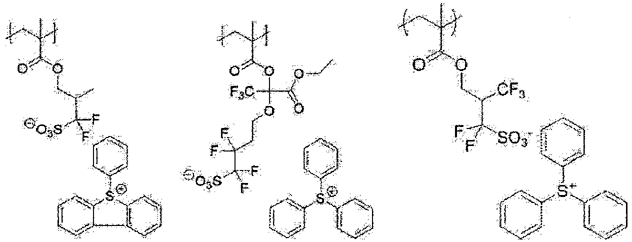

In addition, examples of the repeating unit represented by Formula (4) include repeating units described in paragraphs [0094] to [0105] of JP2014-041327A and repeating units described in paragraphs [0094] of WO2018/193954A.

A content of the repeating unit having a photoacid generating group is preferably 1% by mole or more, and more preferably 5% by mole or more with respect to all repeating units in the resin (A). In addition, the upper limit value thereof is preferably 40% by mole or less, more preferably 35% by mole or less, and still more preferably 30% by mole or less with respect to all repeating units in the resin (A).

### (Repeating Unit represented by Formula (V-1) or Formula (V-2))

The resin (A) may have a repeating unit represented by Formula (V-1) or Formula (V-2).

The repeating unit represented by Formula (V-1) and Formula (V-2) is preferably a repeating unit different from the above-described repeating units.

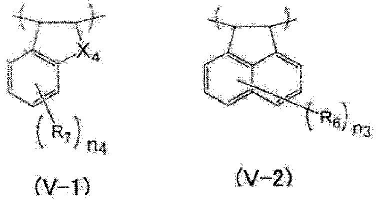

In Formulae (V-1) and (V-2),
R₆ and R₇ each independently represent a hydrogen atom, a hydroxyl group, an alkyl group, an alkoxy group, an acyloxy group, a cyano group, a nitro group, an amino group, a halogen atom, an ester group (-OCOR or -COOR; R is an alkyl group or fluorinated alkyl group having 1 to 6 carbon atoms), or a carboxyl group. As the alkyl group, a linear, branched, or cyclic alkyl group having 1 to 10 carbon atoms is preferable.
n₃ represents an integer of 0 to 6.
n₄ represents an integer of 0 to 4.
X⁴ is a methylene group, an oxygen atom, or a sulfur atom.

Examples of the repeating unit represented by Formula (V-1) or (V-2) include repeating units described in paragraph [0100] of WO2018/193954A.

### (Repeating unit for reducing mobility of main chain)

From the viewpoint that excessive diffusion of a generated acid or pattern collapse during development can be suppressed, the resin (A) preferably has a high glass transition temperature (Tg). The Tg is preferably higher than 90°C, more preferably higher than 100°C, still more preferably higher than 110°C, and particularly preferably higher than 125°C. From the viewpoint that a dissolution rate in the developer is excellent, the Tg is preferably 400°C or lower and more preferably 350°C or lower.

In the present invention, the glass transition temperature (Tg) of a polymer such as the resin (A) (hereinafter, "Tg of the repeating unit") is calculated by the following method. First, each Tg of homopolymers consisting of only the respective repeating units included in the polymer is calculated by the Bicerano method. Next, the mass proportion (%) of each repeating unit to all repeating units in the polymer is calculated. Next, the Tg at each mass proportion is calculated using a Fox's equation (described in Materials Letters 62 (2008) 3152, and the like), and these are summed to obtain the Tg (°C) of the polymer.

The Bicerano method is described in Prediction of polymer properties, Marcel Dekker Inc., New York (1993). In addition, the calculation of a Tg by the Bicerano method can be carried out using MDL Polymer (MDL Information Systems, Inc.), which is software for estimating physical properties of a polymer.

In order to raise the Tg of the resin (A) (preferably to raise the Tg to higher than 90°C), it is preferable to reduce the mobility of the main chain of the resin (A). Examples of a method for lowering the mobility of the main chain of the resin (A) include the following (a) to (e) methods.
(a) introduction of a bulky substituent into the main chain
(b) introduction of a plurality of substituents into the main chain
(c) introduction of a substituent causing an interaction between the resins (A) into the vicinity of the main chain
(d) formation of the main chain in a cyclic structure
(e) linking of a cyclic structure to the main chain

The resin (A) preferably has a repeating unit in which the homopolymer exhibits a Tg of 130°C or higher.

The type of the repeating unit in which the homopolymer exhibits a Tg of 130°C or higher is not particularly limited, and may be any of repeating units in which the homopolymer exhibits a Tg of 130°C or higher, as calculated by a Bicerano method. It corresponds to a repeating unit having a Tg of a homopolymer exhibiting 130°C or higher, depending on the type of a functional group in the repeating units represented by Formulae (A) to (E), which will be described later.

As an example of a specific unit for accomplishing (a) above, a method of introducing a repeating unit represented by Formula (A) into the resin (A) may be mentioned.

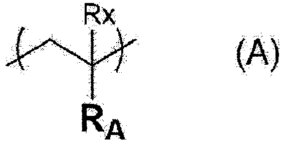

In Formula (A), R_{A} represents a group including a polycyclic structure. Rₓ represents a hydrogen atom, a methyl group, or an ethyl group. The group including a polycyclic structure is a group including a plurality of ring structures, and the plurality of ring structures may or may not be fused.

Specific examples of the repeating unit represented by Formula (A) include repeating units described in paragraphs [0107] to [0119] of WO2018/193954A.

As an example of a specific unit for accomplishing (b) above, a method of introducing a repeating unit represented by Formula (B) into the resin (A) may be mentioned.

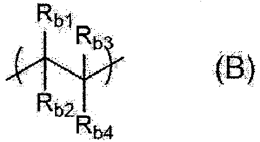

In Formula (B), R_{b1} to R_{b4} each independently represent a hydrogen atom or an organic group, and at least two or more of R_{b1}, ..., or R_{b4} represent an organic group.

In addition, in a case where at least one of the organic groups is a group in which a ring structure is directly linked to the main chain in the repeating unit, the types of the other organic groups are not particularly limited.

In addition, in a case where none of the organic groups is a group in which a ring structure is directly linked to the main chain in the repeating unit, at least two or more of the organic groups are substituents having three or more constituent atoms excluding hydrogen atoms.

Specific examples of the repeating unit represented by Formula (B) include repeating units described in paragraphs [0113] to [0115] of WO2018/193954A.

As an example of a specific unit for accomplishing (c) above, a method of introducing a repeating unit represented by Formula (C) into the resin (A) may be mentioned.

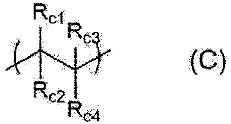

In Formula (C), R_{c1} to R_{c4} each independently represent a hydrogen atom or an organic group, and at least one of R_{c1}, ..., or R_{c4} is a group including a hydrogen-bonding hydrogen atom with the number of atoms of 3 or less from the main chain carbon. Among these, it is preferable that the group has hydrogen-bonding hydrogen atoms with the number of atoms of 2 or less (on a side closer to the vicinity of the main chain) to cause an interaction between the main chains of the resin (A).

Specific examples of the repeating unit represented by Formula (C) include repeating units described in paragraphs [0119] to [0121] of WO2018/193954A.

As an example of a specific unit for accomplishing (d) above, a method of introducing a repeating unit represented by Formula (D) into the resin (A) may be mentioned.

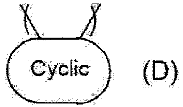

In Formula (D), "cyclic" is a group which forms a main chain as a cyclic structure. The number of ring-constituting atoms is not particularly limited.

Specific examples of the repeating unit represented by Formula (D) include repeating units described in paragraphs [0126] and [0127] of WO2018/193954A.

As an example of a specific unit for accomplishing (e) above, a method of introducing a repeating unit represented by Formula (E) into the resin (A) may be mentioned.

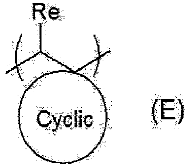

In Formula (E), Re's each independently represent a hydrogen atom or an organic group. Examples of the organic group include an alkyl group, a cycloalkyl group, an aryl group, an aralkyl group, and an alkenyl group, which may have a substituent.
"cyclic" is a cyclic group including a carbon atom of a main chain. The number of atoms included in the cyclic group is not particularly limited.

Specific examples of the repeating unit represented by Formula (E) include repeating units described in paragraphs [0131] to [0133] of WO2018/193954A.

### (Repeating Unit Having At Least One Group selected from Lactone Group, Sultone Group, Carbonate Group, Hydroxyl Group, Cyano Group, or Alkali-soluble Group)

The resin (A) may have a repeating unit having at least one group selected from a lactone group, a sultone group, a carbonate group, a hydroxyl group, a cyano group, or an alkali-soluble group.

Examples of the repeating unit having a lactone group, a sultone group, or a carbonate group included in the resin (A) include the repeating units described in "repeating unit having lactone group, sultone group, or carbonate group" described above. A preferred content thereof is also the same as described in "repeating unit having lactone group, sultone group, or carbonate group" mentioned above.

The resin (A) may have a repeating unit having a hydroxyl group or a cyano group. As a result, adhesiveness to the substrate and affinity for a developer are improved.

The repeating unit having a hydroxyl group or a cyano group is preferably a repeating unit having an alicyclic hydrocarbon structure substituted with a hydroxyl group or a cyano group.

It is preferable that the repeating unit having a hydroxyl group or a cyano group does not have the acid-decomposable group. Examples of the repeating unit having a hydroxyl group or a cyano group include repeating units described in paragraphs [0081] to [0084] of JP2014-098921A.

The resin (A) may have a repeating unit having an alkali-soluble group.

Examples of the alkali-soluble group include a carboxyl group, a sulfonamide group, a sulfonylimide group, a bissulfonylimide group, and an aliphatic alcohol (for example, a hexafluoroisopropanol group) in which the α-position is substituted with an electron withdrawing group, and a carboxyl group is preferable. In a case where the resin (A) includes the repeating unit having an alkali-soluble group, resolution for use in contact holes is increased. Examples of the repeating unit having an alkali-soluble group include repeating units described in paragraphs [0085] and [0086] of JP2014-098921A.

### (Repeating unit having alicyclic hydrocarbon structure and not exhibiting acid decomposability)

The resin (A) may have a repeating unit having an alicyclic hydrocarbon structure and not exhibiting acid decomposability. As a result, it is possible to reduce elution of low-molecular-weight components from the resist film into the immersion liquid during liquid immersion exposure. Examples of such a repeating unit include a repeating unit derived from 1-adamantyl (meth)acrylate, diamantyl (meth)acrylate, tricyclodecanyl (meth)acrylate, or cyclohexyl (meth)acrylate.

### (Repeating unit represented by Formula (III) having neither hydroxyl group nor cyano group)

The resin (A) may have a repeating unit represented by Formula (III), which has neither a hydroxyl group nor a cyano group.

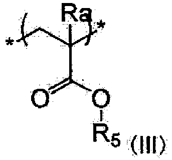

In Formula (III), R₅ represents a hydrocarbon group having at least one cyclic structure and having neither a hydroxyl group nor a cyano group.

Ra represents a hydrogen atom, an alkyl group, or a -CH₂-O-Ra₂ group. In the formula, Ra₂ represents a hydrogen atom, an alkyl group, or an acyl group.

Examples of the repeating unit represented by Formula (III), which has neither a hydroxyl group nor a cyano group, include repeating units described in paragraphs [0087] to [0094] of JP2014-098921A.

### (Other repeating units)

Furthermore, the resin (A) may have a repeating unit other than the above-described repeating units.

For example, the resin (A) may have a repeating unit selected from the group consisting of a repeating unit having an oxathiane ring group, a repeating unit having an oxazolone ring group, a repeating unit having a dioxane ring group, and a repeating unit having a hydantoin ring group.

Such repeating units are exemplified below.

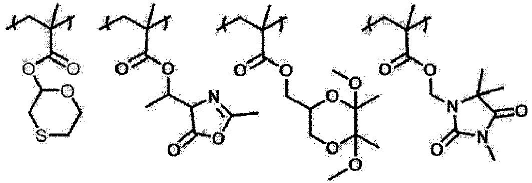

For the purpose of controlling dry etching resistance, suitability for a standard developer, substrate adhesiveness, resist profile, resolution, heat resistance, sensitivity, and the like, the resin (A) may have various repeating structural units in addition to the repeating structural units described above.

As the resin (A), (in particular, in a case where the resist composition is used as an actinic ray-sensitive or radiation-sensitive resin composition with ArF), it is preferable that all repeating units are composed of repeating units derived from a compound having an ethylenically unsaturated bond. In particular, it is also preferable that all repeating units are composed of (meth)acrylate-based repeating units. In this case, any resin of a resin in which all repeating units are methacrylate-based repeating units, a resin in which all repeating units are acrylate-based repeating units, or a resin with all repeating units consisting of a methacrylate-based repeating unit and an acrylate-based repeating unit can be used. In addition, the acrylate-based repeating unit is preferably 50% by mole or less of all repeating units.

The mixed solution may contain one kind or two or more kinds of monomers. In a case of containing two or more kinds of monomers, a content ratio thereof is appropriately set according to properties and physical properties of the RAFT polymerization polymer to be obtained.

### - RAFT agent -

The mixed solution used in the production method according to the embodiment of the present invention contains a RAFT agent as a chain transfer agent.

As the RAFT agent, a RAFT agent usually used in the RAFT polymerization reaction can be used without particular limitation.

Examples of such a RAFT agent include chain transfer agents including a thiocarbonylthio (-C(=S)-S-) group (a chain transfer agent including a cyano group and a thiocarbonylthio group, a chain transfer agent not including a cyano group and including a thiocarbonylthio group, and the like). Specific examples thereof include a dithiobenzoate chain transfer agent, a trithiocarbonate chain transfer agent, a dithiocarbamate chain transfer agent, a dithiocarbonate chain transfer agent, and a xanthate chain transfer agent. As the RAFT agent, agents described in Aust. J. Chem., 2012, 65, pp. 985 to 1076 can be used, and the content described in this document is taken in as it is as part of the description of the present specification. Among these, from the viewpoint of polymerization activity, storage stability of the chain transfer agent, storage stability of the polymer, and cost, a trithiocarbonate chain transfer agent is preferable.

Examples of the chain transfer agent including a cyano group and a thiocarbonylthio group include:
dithiobenzoate chain transfer agents including a cyano group, such as 2-cyano-2-propyl 4-cyanobenzodithioate, 4-cyano-4-(phenylcarbonothioylthio)pentanoic acid, 2-cyano-2-propyl benzodithioate, and 4-cyano-4-(phenylcarbonothioylthio)pentanoic acid N-succinimidyl ester;
trithiocarbonate chain transfer agents including a cyano group, such as 4-cyano-4-[(dodecylsulfanylthiocarbonyl) sulfanyl]pentanoic acid, methyl 4-cyano-4-[(dodecylsulfanylthiocarbonyl) sulfanyl]pentanoate, 2-cyano-2-propyldodecyl trithiocarbonate, 4-cyano-4-[(dodecylsulfanylthiocarbonyl) sulfanyl]pentanol, poly(ethylene glycol) methyl ether 4-cyano-4-[(dodecylsulfanylthiocarbonyl) sulfanyl]pentanoate, poly(ethylene glycol) methyl ether (4-cyano-4-pentanoate dodecyl trithiocarbonate), poly(ethylene glycol) methyl ether (4-cyano-4-pentanoate dodecyl trithiocarbonate), poly(ethylene glycol) methyl ether (4-cyano-4-pentanoate dodecyl trithiocarbonate), and cyanomethyl dodecyl trithiocarbonate;
dithiocarbamate chain transfer agents including a cyano group, such as cyanomethylmethyl(phenyl) carbamodithioate, cyanomethyldiphenyl carbamodithioate, 1-succinimidyl-4-cyano-4-[N-methyl-N-(4-pyridyl)carbamothioylthio]pentanoate, 2-cyanopropan-2-yl N-methyl-N(pyridin-4-yl)carbamodithioate, 2'-cyanobutan-2'-yl 4-chloro-3,5-dimethylpyrazole-1-carbodithioate, and cyanomethylmethyl (4-pyridyl)carbamodithioate; and
xanthate chain transfer agents including a cyano group.

Examples of the chain transfer agent not including a cyano group and including a thiocarbonylthio group include:
dithiobenzoate chain transfer agents not including a cyano group, such as 2-phenyl-2-propyl benzodithioate, 1-(methoxycarbonyl)ethyl benzodithioate, benzyl benzodithioate, ethyl-2-methyl-2-(phenylthiocarbonylthio)propionate, methyl-2-phenyl-2-(phenylcarbonoylthio)acetate, ethyl-2-(phenylcarbonothioylthio)propionate, and bis(thiobenzoyl)disulfide;
trithiocarbonate chain transfer agents not including a cyano group, such as 2-(dodecylthiocarbonylthioylthio)propionic acid, 2-(dodecylthiocarbonylthioylthio)-2-methylpropionic acid, methyl-2-(dodecylthiocarbonylthioylthio)-2-methyl propionate, 2-(dodecylthiocarbonylthioylthio)-2-methylpropionic acid N-hydroxysuccinimide ester, poly(ethylene glycol) methyl ether (2-methyl-2-propionic acid dodecyltrithiocarbonate), poly(ethylene glycol) bis[2-(dodecylthiocarbonylthioylthio)-2-methyl propionate], 2-(dodecylthiocarbonylthioylthio)-2-methylpropionic acid 3-azido-1-propanol ester, 2-(dodecylthiocarbonylthioylthio)-2-methylpropionic acid pentafluorophenyl ester, poly(ethylene glycol) methyl ether 2-(dodecylthiocarbonylthioylthio)-2-methyl propionate, poly(ethylene glycol) methyl ether 2-(dodecylthiocarbonylthioylthio)-2-methyl propionate, poly(ethylene glycol) methyl ether 2-(dodecylthiocarbonylthioylthio)-2-methyl propionate, poly(ethylene glycol) bis[2-(dodecylthiocarbonylthioylthio)-2-methyl propionate], bis(dodecylsulfanylthiocarbonyl) disulfide, and 2-methyl-2-[(dodecylsulfanylthiocarbonyl) sulfanyl]propanoic acid;
dithiocarbamate chain transfer agents not including a cyano group, such as benzyl 1H-pyrrole-1-carbodithioate, methyl 2-propionate methyl(4-pyridinyl) carbamodithioate, and N,N'-dimethyl N,N'-di(4-pyridinyl) thiuram disulfide; and
xanthate chain transfer agents not including a cyano group.

The mixed solution may contain one kind or two or more kinds of RAFT agents.

### - Solvent -

From the viewpoint that the RAFT polymerization reaction can be performed more uniformly, the mixed solution used in the production method according to the embodiment of the present invention preferably contains a solvent.

The solvent is not particularly limited as long as it dissolves the monomer and the RAFT agent and does not inhibit the RAFT polymerization reaction, and a commonly used solvent can be used.

Examples of such a solvent include a solvent of each compound such as glycol, ester, ketone, ether, amide, sulfoxide, and hydrocarbon, and a mixed solvent thereof.

Examples of the solvent of the glycol compound include propylene glycol monomethyl ether acetate, ethylene glycol monomethyl ether acetate, ethylene glycol monoethyl ether acetate, and ethylene glycol monobutyl ether acetate. Examples of the solvent of the ester compound include solvents of a lactic acid ester compound, such as ethyl lactate; solvents of a propionic acid ester compound, such as 3-methoxypropionate; and solvents of an acetic acid ester compound, such as methyl acetate, ethyl acetate, propyl acetate, and butyl acetate.

Examples of the solvent of the ketone compound include acetone, methyl ethyl ketone, methyl isobutyl ketone, methyl amyl ketone, cyclopentanone, and cyclohexanone.

Examples of the solvent of the ether compound include chain-like ethers such as diethyl ether, diisopropyl ether, dibutyl ether, and dimethoxyethane; and cyclic ethers such as tetrahydrofuran and dioxane.

Examples of the solvent of the amide compound include N,N-dimethylformamide and dimethylacetamide.

Examples of the solvent of the sulfoxide compound include dimethyl sulfoxide.

Examples of the solvent of the hydrocarbon compound include aliphatic hydrocarbons such as pentane, hexane, heptane, and octane; alicyclic hydrocarbons such as cyclohexane and methylcyclohexane; aromatic hydrocarbons such as toluene and xylene; and halides of the aliphatic hydrocarbon or the aromatic hydrocarbon, such as chlorobenzene.

Among these, the solvent of the glycol compound, such as propylene glycol monomethyl ether and propylene glycol monomethyl ether acetate; the solvent of the ester compound, such as ethyl lactate; the solvent of the ketone compound, such as acetone, methyl ethyl ketone, methyl isobutyl ketone, methyl amyl ketone, cyclopentanone, and cyclohexanone; the solvent of the amide compound, such as dimethylacetamide; the solvent of the hydrocarbon compound, such as chlorobenzene; or a mixed solvent thereof is preferably used.

The mixed solution may contain one kind or two or more kinds of solvents.

### - Other components-

In the synthesizing step, it is sufficient that the mixed solution contains the monomer and the RAFT agent, and preferably the solvent, and may contain other components.

The other components are not particularly limited, and examples thereof include a component used in the production of a polymer, such as a radical polymerization initiator and a sensitizer.

However, in the synthesizing step, since the RAFT polymerization polymer is produced by decomposing the RAFT agent by light irradiation, it is preferable that the mixed solution does not contain a component involved in the RAFT polymerization reaction, other than the monomer and the RAFT agent. In the present invention, the term "does not contain" includes an aspect in which the content in the mixed solution is 1% by mass or less. In a case where the mixed solution does not contain a component involved in the RAFT polymerization reaction, other than the monomer and the RAFT agent, after the RAFT polymerization reaction, the RAFT polymerization polymer can be purified by a simple purification operation, and a high-purity RAFT polymerization polymer is obtained.

The total content of the monomer, the RAFT agent, and other components in the mixed solution is not particularly limited, and for example, it is preferably 10% to 100% by mass and more preferably 20% to 90% by mass. In the synthesizing step, since the RAFT polymerization reaction can proceed uniformly, the above-described total content in the mixed solution can be set high (at high concentration), and for example, it can be 30% by mass or more, preferably 30% to 90% by mass.

The content of the monomer in the mixed solution is appropriately set in consideration of the above-described total content, and for example, it is preferably 20% to 90% by mass and more preferably 30% to 90% by mass. In the production method according to the embodiment of the present invention, the content of the monomer can also be set high, and for example, it can be 30% by mass or more, preferably 30% to 90% by mass.

The content of the RAFT agent in the mixed solution is appropriately set in consideration of the above-described total content, and for example, it is preferably 0.1% to 30% by mass and more preferably 0.2% to 20% by mass. In addition, in the mixed solution, a molar ratio of the content of the monomer to the content of the RAFT agent [Content of monomer (mol)/Content of RAFT agent (mol)] is appropriately set in consideration of each of the above-described contents, and for example, it is preferably 10 to 10,000, more preferably 20 to 1,000, and still more preferably 20 to 500.

The content of other components is not particularly limited and may be set as appropriate, and for example, it may be 0 to 5 parts by mass in the above-described total content.

The mixed solution can be prepared by pre-mixing the monomer and the RAFT agent, preferably the solvent, and appropriately the other components under, preferably, an inert gas atmosphere with various commonly used mixers. In addition, the mixed solution can also be prepared in a reaction container by continuously rotating the reaction container after charging each of the above-described components into the reaction container.

### - RAFT polymerization polymer -

Next, the RAFT polymerization polymer obtained by the production method according to the embodiment of the present invention will be described.

The RAFT polymerization polymer is a homopolymer or a copolymer of the above-described monomer, and can be various polymers depending on the type of the monomer. Examples thereof include a chain polymerization polymer, and examples of the chain polymerization polymer include a (meth)acrylic polymer, a vinyl polymer, a hydrocarbon polymer, and a halogenated polymer. As a molecular structure of the RAFT polymerization polymer, a molecular structure which can be produced by a normal RAFT polymerization method can be adopted, and examples thereof include a linear structure and a branched structure (graft structure, multi-branched structure, and the like). The molecular structure of the RAFT polymerization polymer is appropriately selected according to the properties and applications of the RAFT polymerization polymer.

In the RAFT polymerization polymer, same as a polymer produced by a normal RAFT polymerization method, a cleavage residue of the RAFT agent is bonded to an end portion in the polymer chain of the monomer. The cleavage residue of the RAFT agent is determined by the type of the RAFT agent. For example, in a case of using the RAFT agent including a thiocarbonylthio group, the thiocarbonylthio group as the cleavage residue is bonded to one end portion in the main chain of the RAFT polymerization polymer, and a cleavage residue other than the thiocarbonylthio group is bonded to the other end portion.

For example, a RAFT polymerization polymer which is obtained in a case of using, as the RAFT agent, the above-described chain transfer agent including a cyano group and a thiocarbonylthio group is a polymer having a terminal (polymer terminal) residue including the cyano group as the cleavage residue other than the thiocarbonylthio group. In the synthesizing step, since the RAFT polymerization polymer having a narrow molecular weight distribution is obtained, solubility in a solvent (for example, a solvent for resist) is high.

On the other hand, in a case of using, as the RAFT agent, the above-described chain transfer agent not including a cyano group and including a thiocarbonylthio group, a RAFT polymerization polymer not having a residue including the cyano group at the terminal is obtained.

A number-average molecular weight (Mn) of the RAFT polymerization polymer obtained by the synthesizing step is not particularly limited, but for example, it is preferably 1,000 to 50,000, more preferably 2,000 to 50,000, still more preferably 3,000 to 40,000, and particularly preferably 3,000 to 20,000.

The molecular weight distribution (Mass-average molecular weight Mw/Number-average molecular weight Mn) of the RAFT polymerization polymer can be narrowed, and for example, it can be 1.23 or less, preferably 1.20 or less.

A peak shape of the molecular weight distribution of the RAFT polymerization polymer obtained by the production method according to the embodiment of the present invention is usually unimodal.

### - Measurement of molecular weight -

In the present invention, unless specified otherwise, the mass-average molecular weight (Mw) and the number-average molecular weight (Mn) of the polymer refer to a mass-average molecular weight and number-average molecular weight in terms of standard polystyrene conversion, which are determined according to gel permeation chromatography (GPC). As a measurement method thereof, a value measured by the following method and conditions is used.
Device: HLC-8220GPC (manufactured by Tosoh Corporation)
Detector: differential refractometer (Refractive Index (RI) detector)
Pre-column: TSK GUARD COLUMN HXL-L 6 mm × 40 mm (manufactured by Tosoh Corporation)
Sample side column: the following three columns directly connected in the following order (all manufactured by Tosoh Corporation)
·TSK-GEL GMHXL 7.8 mm × 300 mm
·TSK-GEL G4000HXL 7.8 mm × 300 mm
·TSK-GEL G2000HXL 7.8 mm × 300 mm
Reference side column: TSK-GEL G1000HXL 7.8 mm × 300 mm
Constant-temperature tank temperature: 40°C
Moving layer: THF
Sample side moving layer flow rate: 1.0 mL/min
Reference side moving layer flow rate: 1.0 mL/min
Sample concentration: 0.1% by mass
Sample injection amount: 100 µL
Data collection time: 5 minutes to 45 minutes after sample injection
Sampling pitch: 300 msec

### Examples

Hereinafter, the present invention will be described in more detail based on Examples, but the present invention is not limited thereto be interpreted. "Part" and "%" that represent compositions in the following Examples are based on the mass unless particularly otherwise described. In the present invention, "room temperature" means 25°C.

### <Preparation of rotating photopolymerization reactor>

In implementation of the production method according to the embodiment of the present invention, as a basic equipment configuration, a rotary evaporator (N-1110, manufactured by EYELA) was adopted, a water bath was installed at the bottom of a reaction container attached to the rotary evaporator, and two LED lightings (TLWA 165x41-22BD-4, 9.6 W, manufactured by ITEC Co., Ltd.) were installed in parallel at positions at a minimum distance of 2 cm from the reaction container so that the upper portion of the reaction container could be irradiated with light, thereby assembling a rotating photopolymerization reactor. An emission spectrum of a light source had an emission maximal wavelength of 462 nm, a full width at half maximum (FWHM) of 21 nm, and an emission range of 430 to 510 nm. As a result of measuring an illuminance of the surface of the flask using a USB4000-small fiber optic spectrometer (manufactured by Ocean Photonics.), the illuminance was 0.4 mW/cm² at a wavelength of 462 nm.

The rotation axis and the inclination angle of the reaction container in the rotating photopolymerization reactor was set to 60° with respect to a vertical direction.

### <Example 1>

### (Step of synthesizing thiocarbonylthio group-containing polymer)

Into a 100 mL eggplant flask used as the reaction container, 5.62 g of methyl methacrylate (MMA), 234 mg of methyl 4-cyano-4-[(dodecylsulfanylthiocarbonyl) sulfanyl]pentanoate (RAFT-1), and 5.62 g of propylene glycol monomethyl ether acetate (PGMEA) were charged. A molar ratio of the content of the monomer to the content of the RAFT agent in the mixed solution [Content of monomer (mol)/Content of RAFT agent (mol)] was 100.2, and a container filling rate calculated using a value obtained by actually measuring the volume of the reaction container (the same applies hereinafter) was 7%.

The eggplant flask was mounted on the above-described rotating photopolymerization reactor installed in a dark room, the inside of the reactor was repeatedly degassed and purged with nitrogen three times, and then under a nitrogen stream, the eggplant flask was immersed in a water bath set at 80°C and continuously rotated at a rotation speed of 190 rpm (thereby preparing a mixed solution). In the continuously rotating eggplant flask, most of the mixed solution became a liquid pool in the lower portion of the reaction container, and a part of the mixed solution, emerging from the liquid pool, adhered to the inner wall surface of the eggplant flask, spread into a thin film, and remixed in the liquid pool to form "spread-remixing and stirring state".

While the eggplant flask was continuously rotated to maintain the above-described spread-remixing and stirring state of the mixed solution, blue light having an illuminance of 0.4 mW/cm² was emitted from the two LED lightings to the thin film-like mixed solution (film-like liquid) for 3 hours to perform a RAFT polymerization reaction. Thereafter, the water bath was removed, and a polymerization reaction product was allowed to cool to room temperature while continuously rotating the eggplant flask.

The rotation of the eggplant flask was stopped to obtain a polymerization reaction product (RAFT polymerization polymer solution 1) containing a RAFT polymerization polymer having a thiocarbonylthio group. A part of the RAFT polymerization polymer solution 1 was sampled, a nuclear magnetic resonance spectrum (NMR) was measured to calculate a conversion rate, and average molecular weights (Mw and Mn) of the RAFT polymerization polymer obtained by the measuring method and conditions described above were measured to calculate a molecular weight distribution. As a result, the conversion rate of the monomer was 94%, the number-average molecular weight (Mn) of the synthesized RAFT polymerization polymer was 8,850, and the molecular weight distribution (Mw/Mn) was 1.19 and unimodal.

### (Removing step)

To the above-described accommodating the RAFT polymerization polymer solution 1 obtained in "Synthesizing step" described above, 2.81 g (23 mol with respect to 1 mol of thiocarbonylthio group) of dibutylhydroxytoluene as a hydroxyl group-containing compound and 16.85 g of propylene glycol monomethyl ether acetate were added, and then the flask was reattached to the above-described rotating photopolymerization reactor. Thereafter, the inside of the flask was degassed and purged with nitrogen, and then under an argon stream, the eggplant flask was immersed in a water bath set at 80°C and continuously rotated at a rotation speed of 190 rpm (thereby preparing a mixed solution).

While the eggplant flask was continuously rotated, blue light having an illuminance of 0.4 mW/cm² was emitted from the two LED lightings to the mixed solution for 3 hours to perform a thiocarbonylthio group-removing (removal of the thiocarbonylthio group) reaction. Thereafter, the reaction mixed solution was allowed to cool to room temperature, and then added dropwise to 230 mL of methanol over 10 minutes, and the precipitated powder was collected by filtration and dried.

As a result, 5.44 g of a polymer from which the thiocarbonylthio group was removed was obtained as a white powder.

As a result of measurements in the same manner as in the RAFT polymerization polymer described above, the number-average molecular weight (Mn) of the obtained polymer was 11,000, and the molecular weight distribution (Mw/Mn) was 1.09 (unimodal). In addition, in a case of measuring a nuclear magnetic resonance spectrum (¹H-NMR, 400 MHz, DMSO-d6), a signal of dodecyl group included in the thiocarbonylthio group was not confirmed. From Matrix-Assisted Laser Desorption Ionization Mass Spectrometry (MALDI-MS analysis), it could be confirmed that one terminal of the polymer was an initiator side unit (nitrile-containing side) of the RAFT agent and the other terminal was a disproportionated terminal (terminal vinyl group). From these results, it was found that the thiocarbonylthio group could be removed from the RAFT polymerization polymer.

### <Examples 2 to 5>

A thiocarbonylthio group-removed polymer was produced in the same manner as in Example 1, except that, in the "Removing step" of Example 1, the type and amount of the hydroxyl group-containing compound used were changed as shown in Table 1. As a result, in any of Examples, the thiocarbonylthio group-removed polymer was obtained as a white powder in the yields shown in Table 1.

In the thiocarbonylthio group-removed polymer produced in each of Examples, since the signal of dodecyl group was not confirmed by the NMR measurement, it was found that the thiocarbonylthio group was removed from the RAFT polymerization polymer. In addition, Table 1 shows the results of measuring the number-average molecular weight and the molecular weight distribution of the thiocarbonylthio group-removed polymer.

### <Example 6>

A thiocarbonylthio group-removed polymer was produced in the same manner as in Example 1, except that, in the "Removing step" of Example 1, the reaction conditions were changed as shown in Table 1 by removing one LED lighting installed in the above-described rotating photopolymerization reactor. As a result, 5.30 g of the thiocarbonylthio group-removed polymer was obtained as a white powder.

In the thiocarbonylthio group-removed polymer produced in the present example, since the signal of dodecyl group was not confirmed by the NMR measurement, it was found that the thiocarbonylthio group was removed from the RAFT polymerization polymer. In addition, Table 1 shows the results of measuring the number-average molecular weight and the molecular weight distribution of the thiocarbonylthio group-removed polymer.

### <Example 7>

A thiocarbonylthio group-removed polymer was produced in the same manner as in Example 1, except that, in the "Removing step" of Example 1, the type and amount of the hydroxyl group-containing compound, and the amount of PGMEA used (added) were changed as shown in Table 1. As a result, 5.30 g of the thiocarbonylthio group-removed polymer was obtained as a white powder.

In the thiocarbonylthio group-removed polymer produced in the present example, since the signal of dodecyl group was not confirmed by the NMR measurement, it was found that the thiocarbonylthio group was removed from the RAFT polymerization polymer. In addition, Table 1 shows the results of measuring the number-average molecular weight and the molecular weight distribution of the thiocarbonylthio group-removed polymer.

### <Example 8>

A thiocarbonylthio group-removed polymer was produced in the same manner as in Example 1, except that, in the "Removing step" of Example 1, the type and amount of the hydroxyl group-containing compound used were changed as shown in Table 1. As a result, 5.30 g of the thiocarbonylthio group-removed polymer was obtained as a white powder.

In the thiocarbonylthio group-removed polymer produced in the present example, since the signal of dodecyl group was not confirmed by the NMR measurement, it was found that the thiocarbonylthio group was removed from the RAFT polymerization polymer. In addition, Table 1 shows the results of measuring the number-average molecular weight and the molecular weight distribution of the thiocarbonylthio group-removed polymer.

### <Example 9>

In Example 9, the "Removing step" was performed while stirring the mixed solution by a magnet stirrer method using a magnetic stirrer, without using the above-described rotating photopolymerization reactor.

That is, to the above-described accommodating the RAFT polymerization polymer solution 1 obtained in "Synthesizing step" of Example 1, 2.81 g (23 mol with respect to 1 mol of thiocarbonylthio group) of dibutylhydroxytoluene as a hydroxyl group-containing compound and 16.85 g of propylene glycol monomethyl ether acetate were added, and then a magnetic stirrer (length: 20 mm) was added thereto. The eggplant flask was fixed on a magnet stirrer (trade name: KF-82M, manufactured by Yazawa Scientific) installed in a dark room, the inside of the flask was degassed and purged with nitrogen, and then under an argon stream, the eggplant flask was immersed in a water bath set at 80°C and stirred at a rotation speed of 200 rpm (thereby preparing a mixed solution). In this state, two LED lightings (TLWA 165x41-22BD-4, manufactured by ITEC Co., Ltd.) were installed in parallel at a position of 2 cm from a side of the flask, and blue light having an illuminance of 0.4 mW/cm² was emitted from the two LED lightings to the mixed solution for 5 hours to perform a thiocarbonylthio group removing. Thereafter, the reaction mixed solution was allowed to cool to room temperature, and then added dropwise to 230 mL of methanol over 10 minutes, and the precipitated powder was collected by filtration and dried.

As a result, 5.38 g of the thiocarbonylthio group-removed polymer was obtained as a white powder.

In the produced thiocarbonylthio group-removed polymer, since the signal of dodecyl group was not confirmed by the NMR measurement, it was found that the thiocarbonylthio group was removed from the RAFT polymerization polymer. In addition, Table 1 shows the results of measuring the number-average molecular weight and the molecular weight distribution of the thiocarbonylthio group-removed polymer.

### <Example 10>

### (Synthesizing step)

A polymerization reaction product (RAFT polymerization polymer solution 2) containing a RAFT polymerization polymer having a thiocarbonylthio group was obtained in the same manner as in "Synthesizing step" of Example 1, except that, in the "Synthesizing step" of Example 1, the type and amount of the RAFT agent used were changed as shown in Table 1. The molar ratio of the content of the monomer to the content of the RAFT agent in the mixed solution [Content of monomer (mol)/Content of RAFT agent (mol)] in the "Synthesizing step" was 100.3. As a result of measurements in the same manner as in Example 1, the conversion rate of the monomer was 96%, the number-average molecular weight (Mn) of the synthesized RAFT polymerization polymer was 9,000, and the molecular weight distribution (Mw/Mn) was 1.19 and unimodal.

### (Removing step)

Next, a thiocarbonylthio group-removed polymer was produced in the same manner as in "Removing step" of Example 1, except that, in the "Removing step" of Example 1, the thiocarbonylthio group-removing reaction was performed in a state in which a flask accommodating the obtained polymerization reaction product (RAFT polymerization polymer solution 2) was used and the light irradiation time was changed to 5 hours, and the reaction mixed solution was allowed to cool to room temperature, and then added dropwise to 300 mL of methanol over 10 minutes. As a result, 5.40 g of the thiocarbonylthio group-removed polymer was obtained as a white powder.

In the produced thiocarbonylthio group-removed polymer, since the signal of dodecyl group was not confirmed by the NMR measurement, it was found that the thiocarbonylthio group was removed from the RAFT polymerization polymer. In addition, Table 1 shows the results of measuring the number-average molecular weight and the molecular weight distribution of the thiocarbonylthio group-removed polymer.

### <Example 11>

### (Synthesizing step)

A polymerization reaction product (RAFT polymerization polymer solution 3) containing a RAFT polymerization polymer having a thiocarbonylthio group was obtained in the same manner as in "Synthesizing step" of Example 1, except that, in the "Synthesizing step" of Example 1, the type and amount of the RAFT agent used were changed as shown in Table 1, and the light irradiation time was changed to 4 hours. The molar ratio of the content of the monomer to the content of the RAFT agent in the mixed solution [Content of monomer (mol)/Content of RAFT agent (mol)] in the "Synthesizing step" was 99.9, and the container filling rate was 6%. As a result of measurements in the same manner as in Example 1, the conversion rate of the monomer was 96%, the number-average molecular weight (Mn) of the synthesized RAFT polymerization polymer was 9,000, and the molecular weight distribution (Mw/Mn) was 1.16 and unimodal.

### (Removing step)

Next, a thiocarbonylthio group-removed polymer was produced in the same manner as in "Synthesizing step" of Example 1, except that, in the "Removing step" of Example 1, the thiocarbonylthio group-removing reaction was performed in a state in which a flask accommodating the obtained polymerization reaction product (RAFT polymerization polymer solution 3) was used and the light irradiation time was changed to 4 hours, and the reaction mixed solution was allowed to cool to room temperature, and then added dropwise to 280 mL of methanol over 10 minutes. As a result, 5.30 g of the thiocarbonylthio group-removed polymer was obtained as a white powder.

In the produced thiocarbonylthio group-removed polymer, since the signal of dodecyl group was not confirmed by the NMR measurement, it was found that the thiocarbonylthio group was removed from the RAFT polymerization polymer. In addition, Table 1 shows the results of measuring the number-average molecular weight and the molecular weight distribution of the thiocarbonylthio group-removed polymer.

### <Examples 12, 13, 15, and 16>

A thiocarbonylthio group-removed polymer was produced in the same manner as in Example 1, except that, in the "Removing step" of Example 1, the type and amount of the hydroxyl group-containing compound used were changed as shown in Table 1. As a result, thiocarbonylthio group-removed polymers were obtained as a white powder with the yields shown in Table 1.

In all thiocarbonylthio group-removed polymers produced in Examples 12, 13, 15, and 16, since the signal of dodecyl group was not confirmed by the NMR measurement, it was found that the thiocarbonylthio group was removed from the RAFT polymerization polymer. In addition, Table 1 shows the results of measuring the number-average molecular weight and the molecular weight distribution of the thiocarbonylthio group-removed polymer.

### <Example 14>

### (Synthesizing step)

Into a 200 mL eggplant flask, 3.50 g of 3,5-bis(1,1,1,3,3,3-hexafluoro-2-hydroxypropan-2-yl)cyclohexyl methacrylate, 5.25 g of 1-methylcyclopentyl methacrylate, 2.92 g of 3-cyano-2-oxohexahydro-2H-3,5-methanocyclopenta [b]furan-6-yl methacrylate, 1.04 g of 4-cyano-4-[(dodecylsulfanylthiocarbonyl) sulfanyl]pentanoate (RAFT-1), and 27.23 g of propylene glycol monomethyl ether acetate were charged, the eggplant flask was mounted on the above-described rotating photopolymerization reactor installed in a dark room, the inside of the reactor was repeatedly degassed and purged with nitrogen three times, and then under a nitrogen stream, the eggplant flask was immersed in a water bath set at 80°C and continuously rotated at a rotation speed of 190 rpm (thereby preparing a mixed solution). In the continuously rotating eggplant flask, the mixed solution was in the "spread-remixing and stirring state" described above. The molar ratio of the content of the monomer to the content of the RAFT agent in the mixed solution [Content of monomer (mol)/Content of RAFT agent (mol)] was 20.0, and the container filling rate was 10%.

While the eggplant flask was continuously rotated to maintain the above-described spread-remixing and stirring state of the mixed solution, blue light having an illuminance of 0.4 mW/cm² was emitted from the two LED lightings to the thin film-like mixed solution for 6 hours to perform a RAFT polymerization reaction. Thereafter, the water bath was removed, and a polymerization reaction product was allowed to cool to room temperature while continuously rotating the eggplant flask.

The obtained polymerization reaction product was added dropwise to 320 mL of heptane over 10 minutes, and the precipitated powder was collected by filtration and dried to obtain 11.5 g of a RAFT polymerization polymer having a thiocarbonylthio group as a yellowish white powder. The conversion rate in this step was calculated in the same manner as in the "Synthesizing step" of Example 1, and the number-average molecular weight and the molecular weight distribution of the RAFT polymerization polymer were obtained. The results are shown in Table 1.

### (Removing step)

The entire amount of the RAFT polymerization polymer obtained in the "Synthesizing step" described above was charged into a 200 mL eggplant flask, and then dissolved in 46 g of propylene glycol monomethyl ether acetate, 5.75 g of dibutylhydroxytoluene was added thereto, and the flask was reattached to the above-described rotating photopolymerization reactor. Thereafter, the inside of the flask was degassed and purged with nitrogen, and then under an argon stream, the eggplant flask was immersed in a water bath set at 80°C and continuously rotated at a rotation speed of 190 rpm (thereby preparing a mixed solution).

While the eggplant flask was continuously rotated, blue light having an illuminance of 0.4 mW/cm² was emitted from the two LED lightings to the mixed solution for 6 hours to perform a thiocarbonylthio group-removing reaction. Thereafter, the reaction mixed solution was allowed to cool to room temperature, and then added dropwise to 460 mL of heptane over 10 minutes, and the precipitated powder was collected by filtration and dried.

As a result, 10.2 g of a polymer from which the thiocarbonylthio group was removed was obtained as a white powder.

In the produced thiocarbonylthio group-removed polymer, since the signal of dodecyl group was not confirmed by the NMR measurement, it was found that the thiocarbonylthio group was removed from the RAFT polymerization polymer. In addition, Table 1 shows the results of measuring the number-average molecular weight and the molecular weight distribution of the thiocarbonylthio group-removed polymer.

### <Comparative Example 1>

A thiocarbonylthio group-removed polymer was produced in the same manner as in Example 1, except that, in the "Removing step" of Example 1, the light irradiation from the LED lightings was not performed (heating reaction at 80°C).

As a result, 5.46 g of a polymer was obtained as a white powder. With regard to the polymer, it was found by NMR measurement that 98% by mole of the thiocarbonylthio group included in the RAFT polymerization polymer remained (removal rate: 2% by mole). In addition, Table 1 shows the results of measuring the number-average molecular weight and the molecular weight distribution of the obtained polymer.

### <Comparative Example 2>

In Comparative Example 2, the removing step was performed using an amino compound instead of the hydroxyl group-containing compound.

That ins, a thiocarbonylthio group-removed polymer was produced in the same manner as in the production method of Example 1, except that, in the "Removing step" of Example 1, the hydroxyl group-containing compound was changed to phenothiazine, and the amount of the phenothiazine used was changed to 3.00 g.

As a result, 5.21 g of a polymer was obtained as a yellowish white powder. With regard to the polymer, it was found by NMR measurement that 80% by mole of the thiocarbonylthio group included in the RAFT polymerization polymer remained (removal rate: 20% by mole). In addition, Table 1 shows the results of measuring the number-average molecular weight and the molecular weight distribution of the obtained polymer.

**[Table 1]**

| | Synthesizing step | | | | | | Removing step | | | | | | | | | | |
|---|---|---|---|---|---|---|---|---|---|---|---|---|---|---|---|---|---|
| | RAFT agent | Used amount | Conversion rate | Mn | Mw/Mn | Peak shape | Hydroxyl group-containing compound | Used amount | Solvent | Used amount | Molar ratio | Reaction condition | Yield | Mn | Mw/Mn | Peak shape | Removal rate |
| Example 1 | | | | | | | BHT | 2.81 g | PGMEA | 16.85 g | 23 | 80°C: 3 hours, rotation speed of 190 rpm, two LEDs | 5.44 g | 11000 | 1.09 | Unimodal | Below detection limit (almost 100% by mole) |
| Example 2 | | | | | | | pMOP | 2.81 g | | | 40 | | 5.35 g | 10500 | 1.09 | Unimodal | Below detection limit |
| Example 3 | | | | | | | TBC | 2.81 g | | | 30 | | 5.40 g | 10900 | 1.10 | Unimodal | Below detection limit |
| Example 4 | | | | | | | TBHQ | 2.81 g | | | 30 | | 5.32 g | 12000 | 108 | Unimodal | Below detection limit |
| Example 5 | RAFT-1 | 234 mg | 94% | 8850 | 1.19 | Unimodal | BHT | 0.56 g | | | 5 | | 5.45 g | 11200 | 1.10 | Unimodal | Below detection limit |
| Example 6 | | | | | | | BHT | 2.81 g | | | 23 | 80°C, 6 hours, rotation speed of 1 90 rpm, one LED | 5.30g | 11500 | 1.09 | Unimodal | Below detection limit |
| Example 7 | | | | | | | IPA | 11.23 g | PGMEA | 5.62 | 334 | 80°C, 3 hours, rotation speed of 190 rpm, two LEDs | 5.30 g | 11200 | 1.14 | Unimodal | Below detection limit |
| Example 8 | | | | | | | IPA | 16.80 g | | 16.85 g | 499 | | 5.30 g | 11200 | 1.14 | Unimodal | Below detection limit |
| Example 9 | | | | | | | BHT | 2.81 g | PGMEA | 16.85 g | 23 | 80°C, 5 hours, magnetic stirrer, two LEDs | 5.38 g | 11300 | 1.10 | Unimodal | Below detection limit |
| Example to | RAFT-2 | 204 mg | 96% | 9000 | 1.19 | Unimodal | BHT | 2.81 g | PGMEA | 16.85 g | 23 | 80°C, 5 hours, rotation speed of 190 rpm, two LEDs | 5.40 g | 11500 | 1.10 | Unimodal | Below detection limit |
| Example 11 | RAFT-3 | 153 mg | 96% | 9000 | 1.16 | Unimodal | | | | | 23 | 80°C, 4 hours, rotation speed of 190 rpm, two LEDs | 530 g | 12000 | 1.11 | Unimodal | Below detection limit |
| Example 12 | RAFT-1 | 234 mg | 94% | 8850 | 1.19 | Unimodal | tBA | 11.00 g | PGMEA | 16.85 g | 265 | 80°C, 3 hours, rotation speed of 190 rpm, two LEDs | 532 g | 11500 | 1.14 | Unimodal | Below detection limit |
| Example 13 | | | | | | | nBA | 11.00 g | | | 265 | | 5.31 g | 12000 | 1.14 | Unimodal | Below detection limit |
| Example 14 | RAFT-1 | 1.04 g | 95% | 5390 | 1.13 | Unimodal | BHT | 5.75 g | PGMEA | 46 g | 10 | 80°C, 6 hours, rotation speed of 190 rpm, two LEDs | 10.2 g | 5350 | 1.13 | Unimodal | Below detection limit |
| Example 15 | RAFT-1 | 234 mg | 94% | 8850 | 1.19 | Unimodal | BHA | 2.81 g | PGMEA | 16.85 g | 28 | 80°C, 3 hours, rotation speed of 190 rpm two LEDs | 5.40 g | 11000 | 1.09 | Unimodal | Below detection limit |
| Example 16 | | | | | | | PG | | | | 24 | | 5.42 g | 11500 | 1.09 | Unimodal | Below detection limit |
| Comparative Example 1 | RAFT-1 | 234 mg | 94% | 8850 | 1.19 | Unimodal | BHT | 2.81 g | PGMEA | 16.85 g | 23 | 80°C, 3 hours, rotation speed of 190 rpm, not irradiated | 5.46 g | 11500 | 1.08 | Unimodal | 2% by mole |
| Comparative Example 2 | | | | | | | PTA | 3.00 g | | | 27 | 80°C, 3 hours, rotation speed of 190 rpm, two LEDs | 5.21 g | 11500 | 1.16 | Unimodal | 20% by mole |

In Table 1, "Mn" indicates the number-average molecular weight of the produced polymer, "Mw/Mn" indicates the molecular weight distribution of the produced polymer, and the peak shape indicates the shape of the curve obtained by the molecular weight measurement. In addition, "Molar amount" indicates the molar ratio of the hydroxyl group-containing compound with respect to 1 mol of the thiocarbonylthio group.

### <Abbreviations in Table 1>

RAFT-1: methyl 4-cyano-4-[(dodecylsulfanylthiocarbonyl) sulfanyl]pentanoate (CAS No. 870532-87-9)
RAFT-2: 2-(dodecylthiocarbonothioylthio)-2-methylpropanoic acid (CAS No. 461642-78-4)
RAFT-3: 2-phenyl-2-propyl benzodithioate (CAS No. 201611-77-0)
BHT: dibutylhydroxytoluene
pMOP: p-methoxyphenol
TBC: 4-tert-butylcatechol
TBHQ: tert-butylhydroquinone
IPA: isopropanol
tBA: tert-butanol
nBA: n-butanol
BHA: 3-tert-butyl-4-hydroxyanisole
PG: propyl gallate
PTA: phenothiazine
PGMEA: propylene glycol monomethyl ether acetate

### <Example 17>

### (Synthesizing step)

### (Step of synthesizing thiocarbonylthio group-containing polymer)

Into a 100 mL eggplant flask used as the reaction container, 5.62 g of methyl methacrylate (MMA), 1054 mg of methyl 4-cyano-4-[(dodecylsulfanylthiocarbonyl) sulfanyl]pentanoate (RAFT-1), and 11.2 g of propylene glycol monomethyl ether acetate (PGMEA) were charged. The molar ratio of the content of the monomer to the content of the RAFT agent in the mixed solution [Content of monomer (mol)/Content of RAFT agent (mol)] was 22.2, and the container filling rate was 7%.

The eggplant flask was mounted on the above-described rotating photopolymerization reactor installed in a dark room, the inside of the reactor was repeatedly degassed and purged with nitrogen three times, and then under a nitrogen stream, the eggplant flask was immersed in a water bath set at 80°C and continuously rotated at a rotation speed of 190 rpm. In the continuously rotating eggplant flask, the mixed solution was in the "spread-remixing and stirring state" described above. While the eggplant flask was continuously rotated to maintain the above-described spread-remixing and stirring state of the mixed solution, blue light having an illuminance of 0.4 mW/cm² was emitted from the two LED lightings to the thin film-like mixed solution (film-like liquid) for 6 hours to perform a RAFT polymerization reaction. Thereafter, the water bath was removed, and a polymerization reaction product was allowed to cool to room temperature while continuously rotating the eggplant flask.

The rotation of the eggplant flask was stopped to obtain a polymerization reaction product (RAFT polymerization polymer solution 4) containing a RAFT polymerization polymer having a thiocarbonylthio group. A part of the RAFT polymerization polymer solution 4 was sampled, a nuclear magnetic resonance spectrum (NMR) was measured to calculate a conversion rate, and average molecular weights (Mw and Mn) of the RAFT polymerization polymer obtained by the measuring method and conditions described above were measured to calculate a molecular weight distribution. As a result, the conversion rate of the monomer was 96%, the number-average molecular weight (Mn) of the synthesized RAFT polymerization polymer was 3,160, and the molecular weight distribution (Mw/Mn) was 1.13 and unimodal.

The polymer solution 4 was added dropwise to 179 g of methanol/water (50/50 w/w), and the precipitated solid was filtered. The solid collected by filtration was vacuum-dried at 40°C for 12 hours to obtain 6.07 g of a white-yellow powder. The number-average molecular weight (Mn) of the synthesized RAFT polymerization polymer was 3,150, and the molecular weight distribution (Mw/Mn) was 1.13 and unimodal.

### (Removing step)

1.0 g of the RAFT polymerization polymer obtained in the "Synthesizing step" described above was charged into a 50 mL eggplant flask, and then dissolved in 4.0 g of propylene glycol monomethyl ether acetate, 1.54 g of gallic acid monohydrate (molar amount with respect to the thiocarbonylthio group was 21.7 mol) was added thereto, and the flask was reattached to the above-described rotating photopolymerization reactor. Thereafter, the inside of the flask was degassed and purged with nitrogen, and then under an argon stream, the eggplant flask was immersed in a water bath set at 120°C and continuously rotated at a rotation speed of 190 rpm. While the eggplant flask was continuously rotated, blue light having an illuminance of 0.4 mW/cm² was emitted from the two LED lightings to the mixed solution for 4 hours to perform a thiocarbonylthio group-removing reaction. Thereafter, the reaction mixed solution was allowed to cool to room temperature, and then added dropwise to 66 ml of methanol/water (50/50 w/w) over 10 minutes, and the precipitated powder was collected by filtration and dried. As a result, 0.7 g of a polymer from which the thiocarbonylthio group was removed was obtained as a white powder.

In the produced thiocarbonylthio group-removed polymer, since the signal of dodecyl group was not confirmed by the NMR measurement, it was found that the thiocarbonylthio group was removed from the RAFT polymerization polymer. In addition, the number-average molecular weight (Mn) of the thiocarbonylthio group-removed polymer was 2,950, and the molecular weight distribution (Mw/Mn) was 1.13 and unimodal.

From the results shown in Table 1 and the results of Example 17, the following was found.

In Comparative Example 1 in which the heating was performed in the removing step instead of the light irradiation, the thiocarbonylthio groups could hardly be removed from the RAFT polymerization polymer containing the thiocarbonylthio group, and the molecular weight was also increased. In addition, in Comparative Example 2 in which the phenothiazine having a hydrogen atom-supplying ability was used instead of the hydroxyl group-containing compound, the thiocarbonylthio group could be removed only at a removal rate of 20% by mole, and the molecular weight was greatly increased. Since the polymer further obtained in the removing step included an amine compound or a residue thereof, the polymer could not be usually applied to a resist application.

On the other hand, in all Examples 1 to 16 in which the removing step was performed using a specific compound as the hydroxyl group-containing compound under light irradiation conditions, although the production method was a simple production method performed under mild conditions, the thiocarbonylthio group of the RFAT polymerization polymer could be removed at a removal rate of almost 100%. Moreover, although the thiocarbonylthio group-removed polymer tended to have a slightly larger molecular weight, the molecular weight distribution was narrow while maintaining unimodality, and the thiocarbonylthio group-removed polymer exhibited properties equal to or higher than those of the RAFT polymerization polymer. In addition, even in Example 17 in which the removing step was performed after the RAFT polymerization polymer obtained in the synthesizing step was once isolated, same as in Examples 1 to 16, despite of mild conditions, a thiocarbonylthio group-removed polymer in which a high removal rate of thiocarbonylthio groups was easily achieved and properties of the polymer were maintained could be produced. Therefore, all of the thiocarbonylthio group-removed polymers obtained in each Example were white, and coloration and generation of decomposition products with time could not be confirmed, so that the thiocarbonylthio group-removed polymer can be expected to be put to practical use in various applications including a resist application.

In a case where an alcohol compound was selected as the hydroxyl group-containing compound, the above-described results could be obtained regardless of the class of the alcohol compound. In particular, in a case where a phenol compound was selected as the hydroxyl group-containing compound, it was possible to further narrow the molecular weight distribution while suppressing an increase in molecular weight of the thiocarbonylthio group-removed polymer. In addition, in a case where the removing step was performed using the rotating photopolymerization reactor, it was possible to perform the production with the synthesizing step continuously, preferably one-pot production, and it was possible to narrow the molecular weight distribution while suppressing an increase in molecular weight.

As described above, according to the present invention, it is possible to produce a thiocarbonylthio group-removed polymer by irradiating a polymer having a thiocarbonylthio group at a terminal of a main chain with light, in which, despite of mild conditions, a high removal rate of thiocarbonylthio groups is easily achieved and properties of the polymer are maintained.

The present invention has been described with the embodiments thereof, any details of the description of the present invention are not limited unless described otherwise, and it is obvious that the present invention is widely construed without departing from the gist and scope of the present invention described in the accompanying claims.

The present application claims the priority of JP2021-059923 filed in Japan on March 31, 2021, the contents of which are incorporated herein by reference, as a part of the description of the present specification.

## Claims

1. A method for producing a thiocarbonylthio group-removed polymer, comprising:
a step of irradiating a mixed solution which contains a polymer having a thiocarbonylthio group at a terminal of a main chain and contains at least one hydroxyl group-containing compound of an alcohol compound or a phenol compound to remove the thiocarbonylthio group from the polymer.

2. The method for producing a thiocarbonylthio group-removed polymer according to claim 1,
wherein a light source is a light emitting diode.

3. The method for producing a thiocarbonylthio group-removed polymer according to claim 1 or 2,
wherein a light source is a light emitting diode which emits light having a wavelength of 300 to 500 nm.

4. The method for producing a thiocarbonylthio group-removed polymer according to any one of claims 1 to 3,
wherein the polymer having a thiocarbonylthio group is a reversible addition-fragmentation chain transfer polymerization polymer.

5. The method for producing a thiocarbonylthio group-removed polymer according to any one of claims 1 to 4, further comprising:
the following step of synthesizing the polymer having a thiocarbonylthio group,
[step of synthesizing polymer having thiocarbonylthio group]
a step of subjecting a monomer to a reversible addition-fragmentation chain transfer polymerization reaction in a presence of a reversible addition-fragmentation chain transfer agent using a rotating photopolymerization reactor equipped with a continuously rotating reaction container to synthesize the polymer having a thiocarbonylthio group,
in which, by continuously rotating the reaction container accommodating a mixed solution which contains the monomer and the reversible addition-fragmentation chain transfer agent around a rotation axis inclined with respect to a vertical direction, while stirring the mixed solution, the mixed solution is spread in a form of a film on an interior wall of the reaction container, and the mixed solution spread in the form of a film is irradiated with light from a light source.

6. The method for producing a thiocarbonylthio group-removed polymer according to claim 5,
wherein the mixed solution to be subjected to the removing step is prepared by mixing a polymerization reaction product obtained in the synthesizing step with the at least one hydroxyl group-containing compound of an alcohol compound or a phenol compound.
